# EUROPEAN PATENT APPLICATION

(11) **EP 4 124 830 A1**
(43) Date of publication of application: **01.02.2023**
(21) Application number: 22151232.0
(22) Date of filing: 12.01.2022
(51) Int. Cl.: G01C 21/36, G01C 21/20, G01C 21/34

(54) **TOUR GUIDE MODE USER INTERFACE AND EXPERIENCE**

(30) Priority: 28.07.2021 US 202117387209
(71) Applicant: Rivian IP Holdings, LLC, Plymouth MI 48170 (US)
(72) Inventor: OTA, Jeffrey, Morgan Hill, 95037 (US); JACOBS, Chris, Palo Alto, 94303 (US); BEISEL, Philipp, San Jose, 95138 (US); QUINT, Jason, Ann Arbor, 48105 (US)
(74) Representative: Walaski, Jan Filip

(57) **Abstract**

Disclosed embodiments include systems, vehicles, and methods to present an option to visit an attraction and to present information about the attraction. In an illustrative embodiment, a computing system operates according to instructions that cause the computing system to: monitor a position of the computing system; present via a visual interface a map including at least one first route; identify via the visual interface at least one attraction situated within a range of the at least one first route; in response to a request to add a visit to the at least one attraction, determine at least one second route from the position to the at least one attraction; present the at least one second route on the map; generate navigational information according to the at least one second route; and when within a predetermined vicinity of the at least one attraction, present information about the at least one attraction.

## Description

### INTRODUCTION

Some vehicles are equipped or outfitted with navigational systems that provide navigational assistance in reaching a selected destination. Many navigational systems also enable users to locate service establishments, such as gas stations, restaurants, or hospitals. For these service establishments, the navigational system may identify the name and type of the establishment, the services provided, and a distance and/or time to reach the service establishment.

### SUMMARY

Disclosed embodiments include systems, vehicles, and methods to present an option to visit an attraction, navigational information to reach the attraction, and information about the attraction.

In an illustrative embodiment, a system includes a computing system having computer-readable media storing computer-executable instructions configured to cause the computing system to: monitor a position of the computing system; present via a visual interface a map including a first route; identify via the visual interface at least one attraction situated within a range of the first route; in response to a request to add a visit to the at least one attraction, determine at least one second route from the position to the at least one attraction; present the at least one second route on the map; generate navigational information according to the at least one second route; and in response to determining that the position is within a predetermined vicinity of the at least one attraction, present information about the at least one attraction.

In another illustrative embodiment, a vehicle includes a cabin configured to receive at least one occupant; a drive system is configured to motivate, accelerate, decelerate, stop, and steer the vehicle; and a computing system having computer-readable media storing computer-executable instructions configured to cause the computing system to: monitor a position of the computing system; present via a visual interface a map including a first route; identify via the visual interface at least one attraction situated within a range of the first route; in response to a request to add a visit to the at least one attraction, determine at least one second route from the position to the at least one attraction; present the at least one second route on the map; generate navigational information according to the at least one second route; and in response to determining that the position is within a predetermined vicinity of the at least one attraction, present information about the at least one attraction.

In another illustrative embodiment, an illustrative computer-implemented method includes: monitoring a position of a computing device associated with a vehicle; presenting via a visual interface a map at least one first route; identifying via the visual interface at least one attraction situated within a range of the at least one first route; in response to a second input to add a visit to the at least one attraction to the route, determining at least one second route from the position to the at least one attraction; presenting the at least one second route on the map; generating navigational information according to the at least one second route; and in response to determining the position is within a predetermined vicinity of the at least one attraction, presenting information about the at least one attraction.

Further features, advantages, and areas of applicability will become apparent from the description provided herein. It will be appreciated that the description and specific examples are intended for purposes of illustration only and are not intended to limit the scope of the present disclosure.

### DRAWINGS

The drawings described herein are for illustration purposes only and are not intended to limit the scope of the present disclosure in any way. The components in the figures are not necessarily to scale, with emphasis instead being placed upon illustrating the principles of the disclosed embodiments. In the drawings:
FIGURES 1-30 are block diagrams of an illustrative system and illustrative screen displays for a system that uses navigational information to reach an attraction and present information about the attraction.
FIGURE 31 is a perspective view of a cabin of a vehicle with access to the system of FIGURES 1-30;
FIGURE 32 is a block diagram of an illustrative computing system for performing functions of the system of FIGURES 1-30;
FIGURE 33 is a block diagram of one or more illustrative systems of FIGURES 1-30 communicating with one or more remote systems;
FIGURES 34-36 are block diagrams in partial schematic form of illustrative vehicles that include the system of FIGURES 1-30; and
FIGURES 37 and 38 are flow charts of illustrative methods for generating navigational information to reach an attraction and/or providing information about the attraction.

### DETAILED DESCRIPTION

The following description explains, by way of illustration only and not of limitation, various embodiments.

By way of a non-limiting introduction and overview, in various embodiments, a computing device monitors a position of the computing device and presents via a visual interface a map including at least one first route. The computing device identifies via the visual interface at least one attraction within a predetermined range of the route. In response to the user selecting at least one of the attractions, the system generates at least one second route from the position to the at least one selected attraction. Upon coming within a predetermined vicinity of an attraction or a point of interest associated with the attraction, the system provides information about the attraction or point of interest, thereby acting as a tour guide for the attraction.

Now that a general overview has been given, details of various embodiments will be explained by way of non-limiting examples given by way of illustration only and not of limitation.

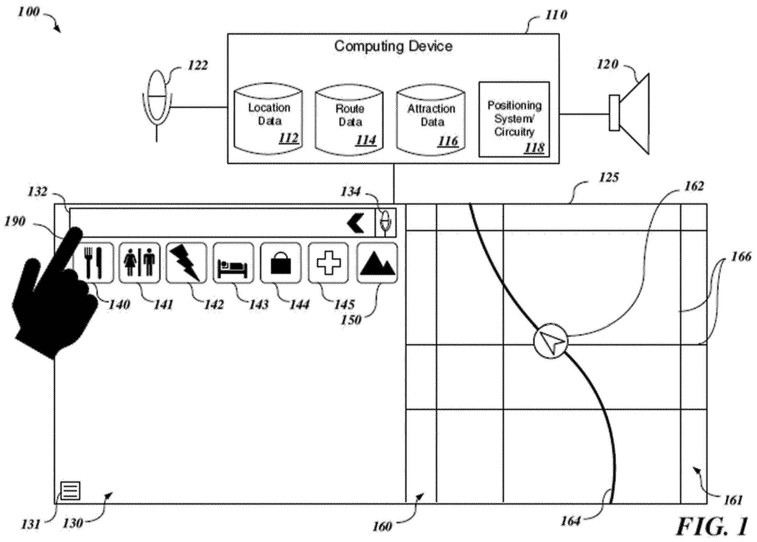

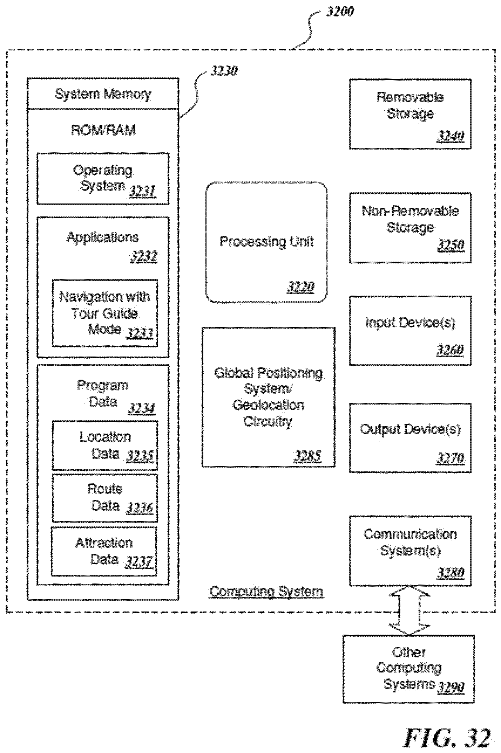

Referring to FIGURE 1, an illustrative system 100 includes a computing device 110 that is in communication with a visual interface 125 such as an interactive display. In various embodiments, the visual interface 125 is a touchscreen device capable of providing output from and receiving input to the computing device 110. An illustrative form of the computing device 110 is further described below with reference to FIGURE 32. For now, it should be appreciated that the computing device 110 maintains or is configured to access position data 112, route data 114, and attraction data 116, the use of which is further described below. In various embodiments, the computing device 110 includes positioning system circuitry, such as global positioning system (GPS) circuitry, geolocation circuitry, or other positioning circuitry to enable the computing device 110 to monitor its position. In various embodiments, the computing device 110 also includes an audio output interface 120, such as one or more speakers or a transmission system configured to communicate with other audio transducers operable to generate sound. In various embodiments, the computing device 110 also includes an audio input interface 122, such as one or more microphones or a reception system configured to communicate with other audio transducers operable to receive audio input from a user.

In various embodiments, the visual interface 125 is configured to present textual and graphical information and, as previously described, receive tactile input. In various modes, the visual interface may include an information section 130 (which may be used for receiving and communicating text-based or symbol-based information) and a map section 160 (which may be used for displaying maps and other graphical information including, but not limited to, pictures, videos, and the like). As further described below, however, both the information section 130 and the map section 160 may present both textual and/or graphical information, as desired.

The information section 130 includes an entry field 132 that is engageable to enter textual information. In various embodiments, as is familiar to users of contemporary touchscreen devices such as GPS devices or smartphones, engaging the entry field 132 with a digit 190, such as a finger, invokes an on-screen keyboard (not shown) that a user may use to identify a destination or provide other input. The information section 130 also may include a voice entry key 134 that activates the audio input interface 122 to enable the user to provide verbal input. In various embodiments, the audio input interface 122 also may be activated by a "wake word" or other input to enable provision of audio input without engaging a tactile input. The information section 130 also may include an options key 131 that enables a user to, for example, choose attractions that may be presented to a user, how those attractions are filtered or sorted, what information is presented to the user (or other persons), and other options, as further described below. Options also may be accessible by presenting a verbal command via the audio input interface 122 or with a command presented via another input device.

The information section 130 also may include various keys 140-145 to identify various nearby services. The information section 130 may include without limitation a food/restaurant key 140, a restrooms key 141, a charging or fuel station key 142 (depending on whether the system 100 is associated with an electric vehicle or an internal-combustion-powered vehicle), a hotel/lodging key 143, a shopping key 144, a medical services key 145, and the like. Engaging one of these keys 140-145, which may be physical keys or sections of the visual interface 125 that are associated with these services may cause the system 100 to show service establishments of the selected type on a map in the map section 160 of the visual interface 125.

In various embodiments, the information section 130 also includes a tour guide key 150. As further described below, the user may engage the tour guide key 150 to identify one or more attractions within a predetermined range of a route the user is traveling. Then, when the system 100 nears the attraction, the system 100 provides information about the attraction or about specific points of interest associated with the attraction, acting as a tour guide for the user. The tour guide mode also may be invoked with verbal input via the audio input interface 122, such as by using the wake word and providing an associated verbal command or by presenting a specific verbal command to initiate the tour guide mode directly.

In various embodiments, when the system 100 is not being used to provide directions or other navigational information, the map section 160 may show a current position 162 of the system 100 on a map 161. Particularly because some embodiments of the system 100 may be carried aboard or integrated with a vehicle, the map 161 may include a roadway 164 currently being traveled as well as other roadways 166 in an area encompassed in a view presented in the map section 160. As further described below, the information presented in the map section 160 is modifiable to present other information based on the current operating mode of the system 100.

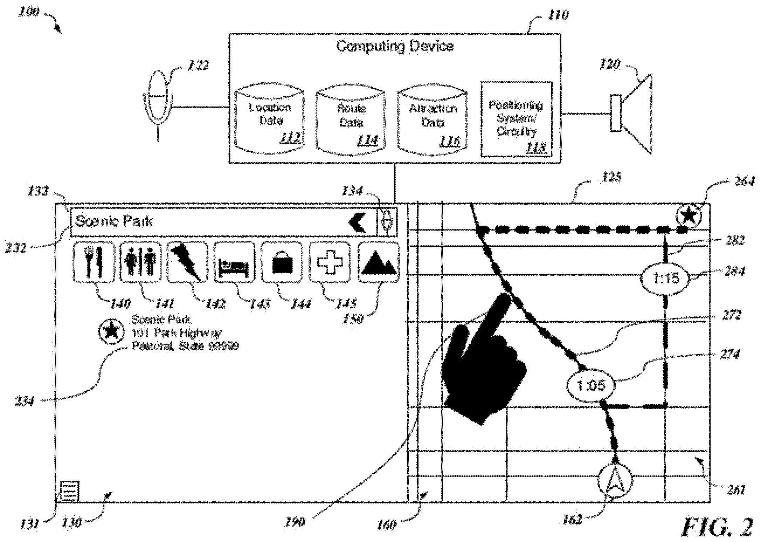

Referring additionally to FIGURE 2, the user has engaged the entry field 132 or the audio input interface 122 to enter a destination 232 into the system 100. The computing device 110, using the position data 112, identifies an address or other location 234 for the destination 232. In an example given by way of illustration only and not of limitation, the destination 232 is an outdoor area named "Scenic Park," which can be accessed at 101 Park Highway, in Pastoral, State 99999 (as listed in the information section 130 of the visual interface 125). Upon the position 234 of the destination 232 being identified from the position data 112, the computing device 110 accesses the route data 114 to identify one or more routes to the destination 232. In various embodiments, multiple routes 272 and 282 are presented on an updated map 261 presented in the map section 160 of the visual interface 125. To assist the user in choosing a route from among the presented routes 272 and 274, estimated travel times 282 and 284, respectively, are presented for the routes 272 and 274. The estimated travel times 282 and 284, respectively, may be presented in the information section 130 and/or in the map section 160, as shown in FIGURE 2. To choose a particular route, in various embodiments, the user may select one of the routes 272 and 274 by engaging one of the routes 272 or 274 with a digit 190, as shown in FIGURE 2 (in which the user has selected the route 272). In various embodiments, the routes 272 and 274 also may be described in the information section and/or one of the routes 272 or 274 may be selected by selecting the information for the route 272 or 274 from the information section 130 or via the audio input interface 122 with a verbal command.

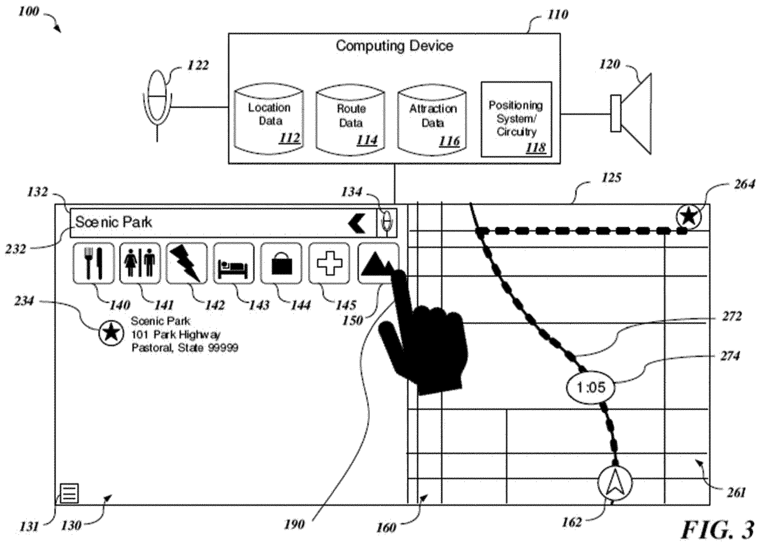

Referring additionally to FIGURE 3, with the user having selected the route 272 from the current position 162 to the destination 264 as described with reference to FIGURE 2, the user now chooses to activate the tour guide mode. To do so, as previously described, the user engages the tour guide mode button 150 with a digit 190. As previously mentioned, in various embodiments, the user also could invoke the tour guide mode via the audio input interface 122 with a wake word and a command or a specialized verbal command associated with the tour guide mode. In addition, in various embodiments, the user may activate the tour guide mode without the traveling to an identified destination. For example, the tour guide mode may have been engaged from the interface described with reference to FIGURE 1 without the user having specified a destination. The system 100 may identify attractions within a predetermined distance of the currently-travelled route.

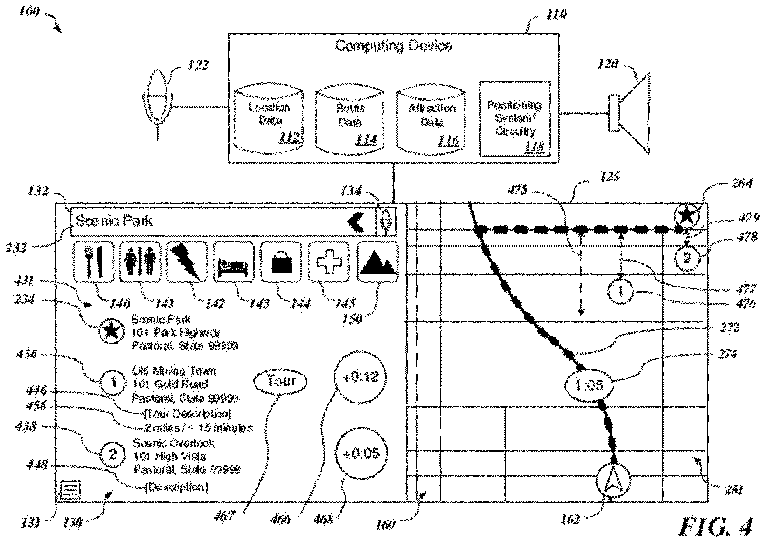

Referring additionally to FIGURE 4, in response to activation of the tour guide mode, the computing device 110 engages the attraction data 116 (possibly in concert with the route data 114), to identify a list of attractions 431 including attractions 436 and 438 that the user may wish to visit on the way to the destination 264.

In various embodiments, a location (e.g., an address or other coordinate position) of each of the attractions 436 and 438 may be listed in the information section 130 while a location with respect to the map 261 of each of the attractions 476 and 478, respectively, are presented on the map 261 in the map section 160 of the visual interface 125. It will be appreciated that while two attractions 436 and 438 are shown in this example, there is no limit on the number of attractions that may be identified and presented by the system 100.

In various embodiments, the attractions 436 and 438 identified are those which are within a predetermined range of the route 272. For the sake of illustration, the range may include a predetermined distance 475, as graphically represented in the map section 160. The predetermined range maybe measured either in terms of distance or travel time. Given by way of non-limiting examples, a first attraction 436 is within a distance 477 of the route 272 while a second attraction 438 is within a distance 479 of the route 272 -- with both distances 477 and 479 being within the predetermined range 475. In various embodiments, the predetermined range may be selectable or adjustable by a user or may be preestablished in instructions in the computing device 110. In this example, it will be appreciated that the distance 475 is a schematic way of illustrating the predetermined range and that the computing device would not perform a graphical measurement between the route 272 and the attractions 436 and 438 to determine if each of them is within the predetermined range of the route 272.

In various embodiments, the information section 130 presents one or more details about each of the attractions 436 and 438. In this example, for the first attraction 436, "Old Mining Town," the details 446 include a tour description 456. The attraction 436 includes a tour identifier 467, which indicates that the first attraction 436 includes a tour with multiple points of interest, as further described below. Accordingly, a tour description 456 identifies an estimated distance and/or time of the tour. For the second attraction 438, "Scenic Overlook," a description 448 is also provided. For both attractions 436 and 438, an additional detail in the form of additional time involved in traveling via each attraction 466 and 468, respectively, is presented to aid the user in their consideration of whether visits to one or both attractions 436 and 438 fit within their travel plans.

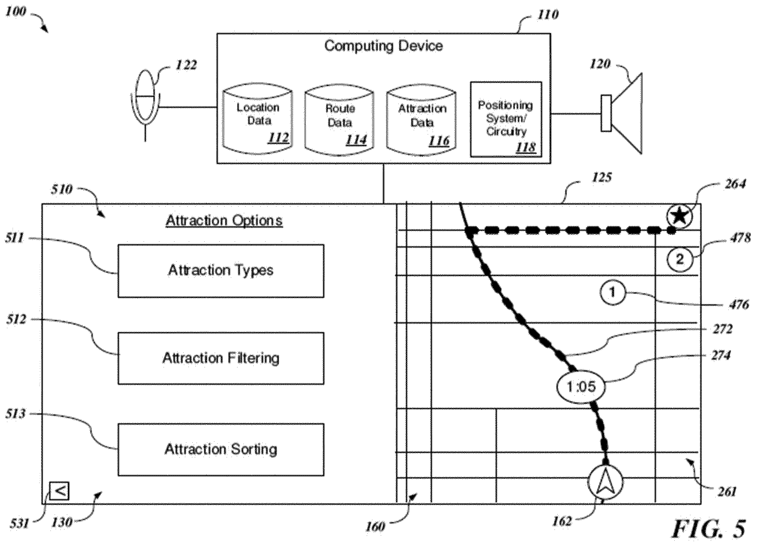

It will be appreciated that some geographical areas may offer a vast number of attractions to be visited. Many attractions may be situated within a short distance of a route to one's destination and the sheer number of attractions may make it difficult to consider all the attractions, let alone identify one of interest. Thus, in various embodiments, preferences regarding attractions may be set by a user preference input or selection and/or according to default options to help identify attractions that the user or other persons might want to visit. Referring additionally to FIGURE 5, an attractions options screen 510 is presentable via the information section 130. The attraction option screen 510 may be accessed via the options button 131 (FIGURES 1-4), by presenting a verbal command via the audio input interface 122, or with a command presented via another input device. The attraction options screen 510 may include an attraction types option 511 to enable a user to identify those types of attractions of interest to the user or other persons. The attraction options screen 510 may include an attraction filtering option 512 to enable a user to exclude attractions based on specified parameters. The attraction options screen 510 may include an attraction sorting option 513 to enable a user to prioritize attractions of possible interest to determine which attractions may be listed first when the user selects the tour guide mode to view such attractions. Examples of the options 511-513 are described further below. The user may access one of the options 511-513 by touching a selected option via the visual interface 125 or with a voice command presented via the audio input interface 122. A back or exit key 531 enables the user to exit the attraction options screen 510.

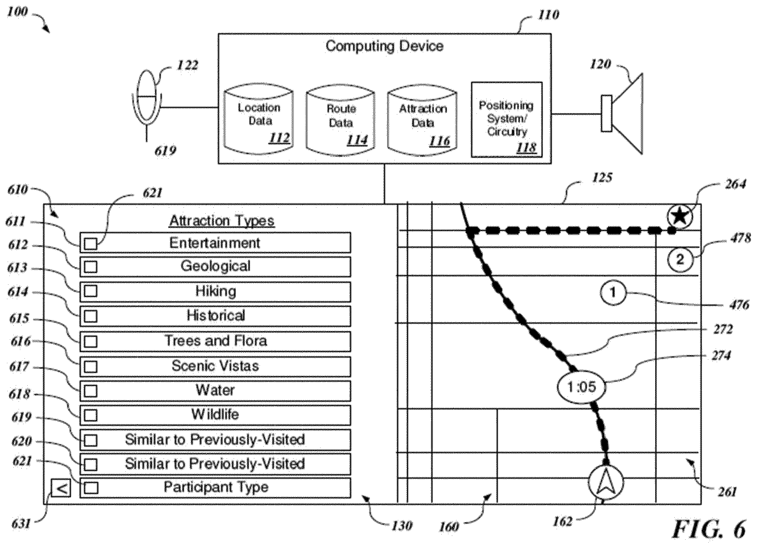

Referring additionally to FIGURE 6, in various embodiments, in response to the user selecting the attraction types option 511 from the attraction options screen 510 (FIGURE 5), an attraction types screen 610 is presented. From the attraction types screen 610, a user can select from a list of attraction types 611-621 that may be of interest by subject matter or to types of people. A user may select from the attraction types 611-621 to indicate an interest in a type of attraction. For example, an entertainment type 611 may include amusement parks, zoos, or other forms of entertainment suited to a general audience. A geological type 612 may include interesting land features, such as mountains, mesas, cliffs, caverns, or other features that might be found in or on the earth. A hiking type 613 may include trails or paths. An historical type 614 may include historical buildings, historical markers, museums, battlefields, cemeteries, or other landmarks.

A trees and flora type 615 may include gardens, forests, conservatories, fields, or other places featuring trees, flowers, or other flora of interest. A scenic vistas type 616 may include scenic overlooks or sights. A water type 617 may include rivers, streams, lakes, beaches, or coastlines. A wildlife type 618 may include sites that are good for birding, viewing wild horses, or other fauna. In addition, in various embodiments, the attraction types may include a similar to previously-visited attractions type 619. In various embodiments, the system 100 may store attractions that have been previously visited and identify attractions of the same type. The attraction types also may include a preferences type 620. The preferences type may maintain a set of previously-identified preferences so that the user does not have to reenter previous choices if the user wishes to select the same types of attractions the user has selected before. A participant type 621 may be used to identify the person or persons who may be partaking in the attraction, such as young children, children, teenagers, or handicapped persons, and attractions matching those age ranges and/or providing accessibility options may be selected from among available attractions.

In various embodiments, the selections made from the attraction types screen 610 may remain set until the selections are changed or the selections may persist only for the current trip to the specified destination 232 (FIGURES 2-4). In various embodiments, a back or exit key 631 enables a user to exit the attraction types screen 610. A user may select the individual types 611-620 by touching the types 611-620 via the visual interface 125 or by touching a checkbox 621 or radio button (not shown) associated with each of the types 611-620. The types 611-620 may change in color or other visual attribute when selected. In addition or in the alternative, the checkbox 621 may show an "X" or checkmark to indicate when an associated type has been selected. In various embodiments, the attraction types list 610 also may be controlled with verbal inputs via the audio input interface 122 or by engaging another input device.

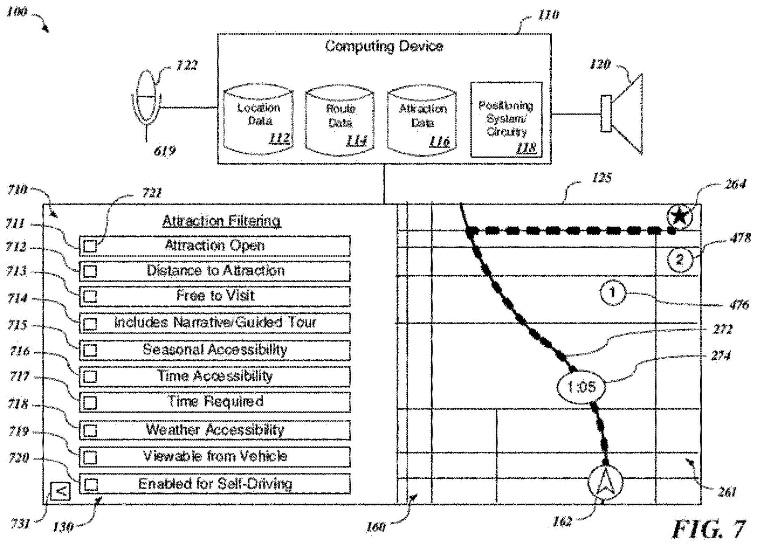

Referring additionally to FIGURE 7, in addition to specifying types of attractions in which the user may be interested, in various embodiments the system enables a user to specify criteria for filtering the available attractions. In contrast to allowing a user to specify subject matter types as described with reference to FIGURE 6, enabling the user to filter attractions enables the user to apply other criteria to identify one or more attractions that may be desirable to visit. In various embodiments, in response to the user selecting the attraction filtering option 512 from the attraction options screen 510 (FIGURE 5), an attraction filtering screen 710 is presented. From the attraction filtering screen 710, a user can select criteria 711-720 that may be used to filter the potential attractions. In various embodiments, the criteria may be inclusive criteria (i.e., criteria that an attraction must meet to be included for consideration) or exclusive criteria (i.e., criteria that, if met, will result in the attraction not being listed for consideration). For example, in various embodiments, the attraction filtering screen 710 may include an attraction open filter 711 which, when selected, would exclude from the list any attractions that are currently closed, closed for the season, or will be closed at a time when the attraction may be reached. A distance to attraction filter 712 may be used to limit the attractions to those within a predetermined or user-specified distance from a current position or distance from the route on which the user travels. Selecting the distance to attraction filter 712 may invoke another user input to specify or modify a distance or time that the user considers reasonable to consider a side trip to an attraction.

A free to visit filter 713 may be used, for example, to exclude attractions that charge an admission fee. An includes narrative/guided tour filter 714 may exclude attractions for which the system 100 is not configured to provide information as further described below. A seasonal accessibility filter 715 may exclude attractions that are not open in the current season. For example, in winter, water parks or amusement parks that may only be open in the summer be excluded by selecting the seasonal accessibility filter 715. A time accessibility filter 716 similarly may exclude attractions that will be closed for the day when the user reaches the attraction. A time required filter 717, comparable to the distance to attraction filter 712, may allow a user to exclude attractions for which the visit will require more than a predetermined or user-selected time to perform. A weather accessibility filter 718 may exclude attractions that are not accessible or undesirable under prevailing weather conditions when the user would reach the attraction. A viewable from vehicle filter 719 may exclude all attractions that a user cannot enjoy without leaving the vehicle. An enabled for self-driving filter 720 may be used to select attractions on which the vehicle may operate autonomously, in self-driving mode, so that the operator may enjoy the attraction without having to manually operate the vehicle.

In various embodiments, the selections made from the attraction filtering screen 710 may remain set until the selections are changed or the selections may persist only for the current trip to the specified destination 232 (FIGURES 2-4). In various embodiments, a back or exit key 731 enables a user to exit the attraction filtering screen 710. In various embodiments, a user may select the individual filters 711-720 by touching the filters 711-720 via the visual interface 125 or by touching a checkbox 721 or radio button (not shown) associated with each of the filters 711-719. The types 711-719 may change in color or other visual attribute when selected. In addition or in the alternative, the checkbox 721 may show an "X" or checkmark to indicate when an associated type has been selected. In various embodiments, the attraction filter list 710 also may be controlled with verbal inputs via the audio input interface 122 or by engaging another input device.

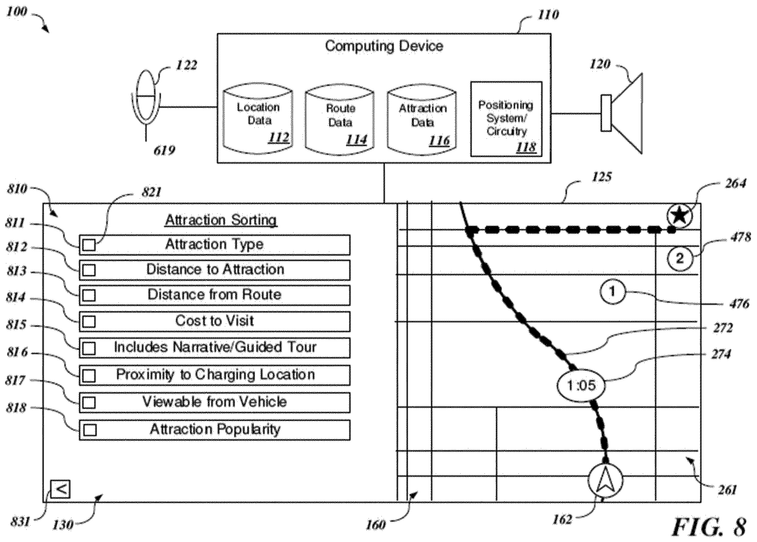

Referring additionally to FIGURE 8, in addition to specifying types of attractions in which the user may be interested and filtering those attractions, in various embodiments, the system enables the user to sort an order in which the available attractions are presented. In response to the user selecting the attraction sorting option 513 from the attraction options screen 510 (FIGURE 5), an attraction sorting screen 810 is presented. From the attraction sorting screen 810, a user can select criteria 811-818 that may be applied to sort the order in which potential attractions are presented. For example, in various embodiments, the attraction sorting screen 810 may include an attraction type option 811 which presents attractions in order of type, such as the attraction types 611-620 listed on the attraction types screen 610 (FIGURE 6). For example, default rules may sort potential attractions according to type alphabetized by category, by user selection, or using another order. A distance to attraction option 812 may sort the attractions by nearest to a present position to furthest away, or vice versa, to allow for planning based on time and distance to reach the attraction. A distance from route option 813 may sort the attractions by distance from the route being traveled from shortest distance to furthest or vice versa, for example, to enable a user to consider which attractions might be the least distance out of their way to the destination.

A cost to visit option 814 may sort the attractions from lowest cost to highest cost to visit, or vice versa, for example, to enable a user to consider first those attractions that would be the least expensive to visit. An includes narrative/guided tour filter 815 may prioritize those attractions for which the system 100 includes narrative or tour guide information. A proximity to a power replenishment station option 816 (such as an electric charging location or a fuel station) may first list those attractions that are close to an energy replenishment station to, for example, enable a user to consider attractions that are conveniently located at or near a charging station. As a result, a user may select an attraction that may be visited while the vehicle is charging or, at least, to visit an attraction near a charging location while travel is already being delayed for recharging. A viewable from vehicle option 817 may prioritize or deprioritize attractions that require walking, as opposed to attractions that may be viewed from the vehicle. For example, walking attractions may appeal more if a user would like to stretch their legs, while an attraction that does not require walking may be appealing when a user or companion is unable or unwilling to walk or if the weather is inhospitable. An attraction popularity option 818 may, for example, prioritize attractions based on how frequently the attraction is visited. The popularity may be determined by evaluating user visit or user review data retrievable via the Internet or through another process.

The selections made from the attraction sorting screen 810 may remain set until the selections are changed or the selections may persist only for the current trip to the specified destination 232 (FIGURES 2-4). A back or exit key 831 enables a user to exit the attraction sorting screen 810. A user may select the individual filters 811-818 by touching the sorting options 811-818 via the visual interface 125 or by touching a checkbox 821 or radio button (not shown) associated with each of the options 811-818. The options 811-818 may change in color or other visual attribute when selected. In addition or in the alternative, the checkbox 821 may show an "X" or checkmark to indicate when an associated type has been selected. In various embodiments, multiple sorting criteria may be selected, for example, to sort first according to the distance to attraction 812 option and then by one or more other criteria, such as distance from route, proximity to a power replenishment station, etc. The attraction sorting screen 810 also may be controlled with verbal inputs via the audio input interface 122 or by engaging another input device.

By using the attractions type screen 610, the attractions filtering screen 710, and the attraction sorting screen 810, the attractions presented or how they are presented may be changed. As previously described with reference to FIGURE 4, selecting tour guide mode initially presented two attractions 476 and 478 on the way to the destination 234, including the "Old Mining Town" attraction 436, listed first, and the "Scenic Overlook" attraction 438, listed second. However, application of the options described with reference to FIGURES 5-8 change which attractions are presented and/or how they are sequenced.

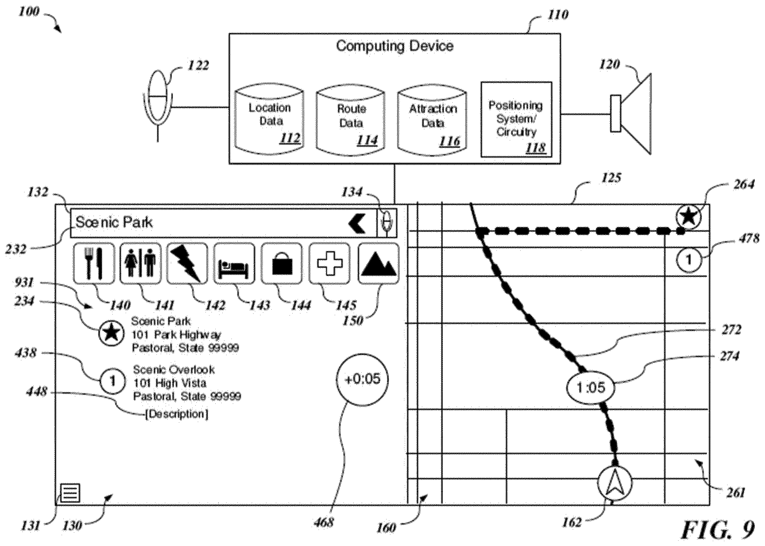

For example, from the attraction type screen 610, the user may choose to select the scenic vistas option 616. As a result, referring to FIGURE 9, the updated attraction list 931 includes only the "Scenic Overlook" attraction 438. Because the "Old Mining Town" attraction 436 is not of the selected type, it is not included in the updated attraction list 931.

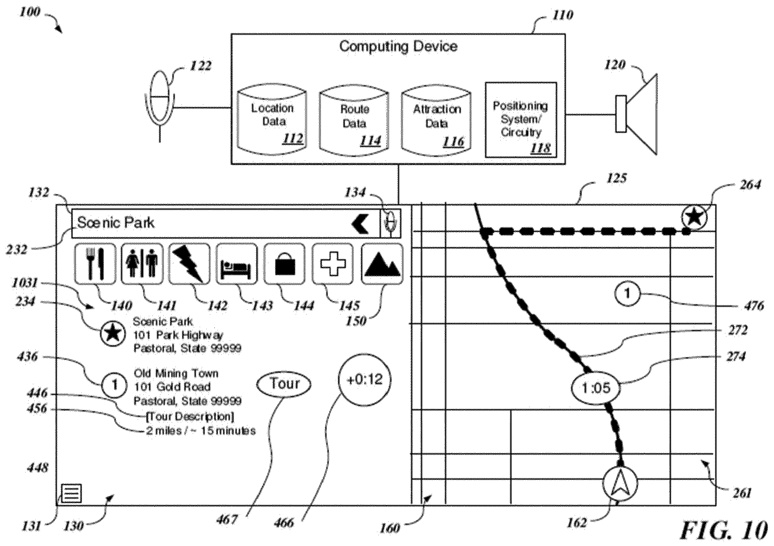

For further example, from the attraction filtering screen 710, the user may choose the includes narrative/guided tour option 815. As a result, referring to FIGURE 10, only the "Old Mining Town" attraction 436 is included in the updated attraction list 1031 because, as described with reference to FIGURE 4, the "Scenic Overlook" attraction 438 did not have an associated tour.

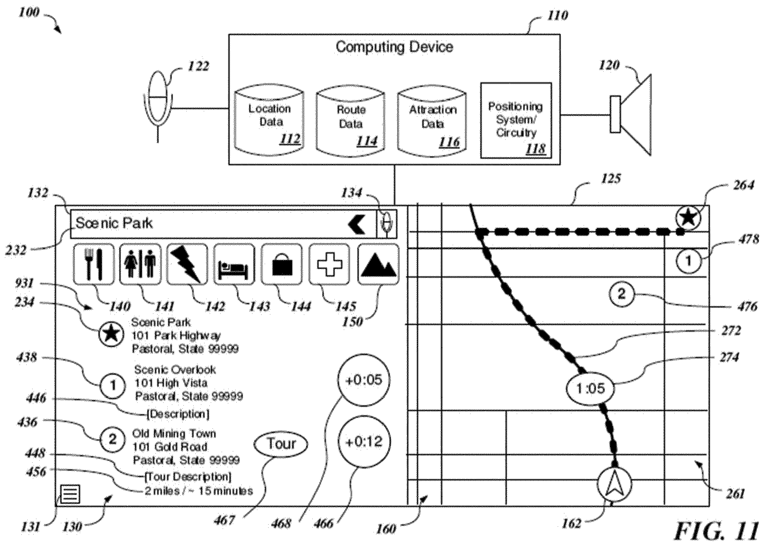

For another example, from the attraction sorting screen 810, the user may choose to sort the list using the distance from route option 813. As a result, referring to FIGURE 11, instead of the "Old Mining Town" attraction 436 being listed ahead of the "Scenic Overlook" attraction 438, in the updated attraction list 1131, the "Scenic Overlook" attraction 438 is listed first. Referring to the map 261 of FIGURE 4, the location 478 of the "Scenic Overlook" attraction 438 is closer to the destination 264 than is the "Old Mining Town" attraction 436. Thus, attractions 436 and 438 are sorted and renumbered accordingly in the updated attraction list 1131. It will be appreciated that each of the attraction types 610 screen, the attraction filtering screen 710, and/or the attraction sorting screen 810 may be used to select and apply preferences separately or in combination to tailor the resulting attraction list as desired.

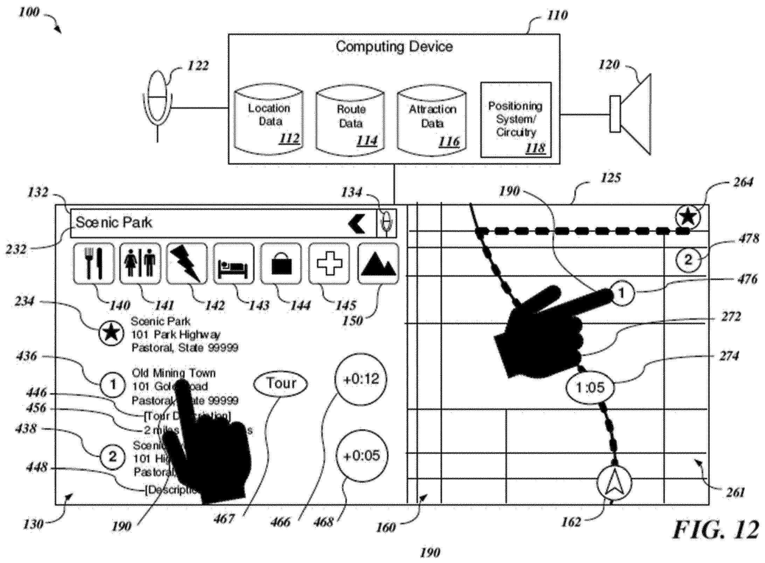

Referring additionally to FIGURE 12, according to various embodiments, the system 100 may provide additional information to the user to aid the user in determining whether the attractions 436 and/or 438 are of interest. By selecting one of the attractions 436 or 438, the user communicates to the system 100 a desire to receive more information. The user may select one or more of the attractions with a tactile input, by using a digit 190 to engage the listing of the attraction 436 or 438 in the information section 130 or the location of each of the attractions 476 and 478, respectively, in the map section 150. Additionally, or alternatively, the user may select one of the attractions via the audio input interface 122 with a wake word and/or command, as previously described. In the example shown in FIGURE 12, the user selects the first attraction, "Old Mining Town," by selecting its listing 436 or its location 476 with a tactile engagement of the visual interface 125 with a digit 190. However, it will be appreciated that a verbal command may also be used.

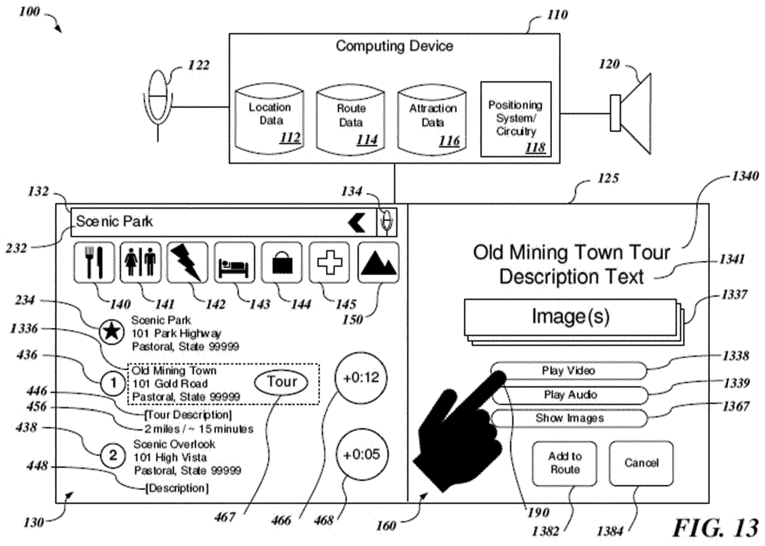

Referring additionally to FIGURE 13, in response to the user's selection of the first attraction, the listing of the first attraction 436 may be marked with a highlight 1336 in the information section 130 and additional information 1340 about the first attraction 436 may be presented in the map section 160 of the visual interface 125. It will be appreciated that the additional information 1340 may be presented in the information section 130 and/or in the map section 160, and this presentation is just one possible way in which the information may be presented to the user.

The additional information 1340 about the first attraction 436 (as well as other attractions) may include many different types of information. The additional information 1340 may include a textual description 1341 of the first attraction 436 which, in this example, includes a tour. The additional information 1340 also may include one or more images 1337 of the attraction 1336 or an option to present such images 1367. The additional information 1340 also may include one or more videos or audio information. In various embodiments, the user may be given a play video option 1338 to play video about the first attraction 436, which is then played via the visual interface 125. In various embodiments, the user may be given a play audio option 1339 to play audio about the first attraction 436, which is then played via the audio output interface 120. The user can elect to engage in the additional information 1341 by using a digit 190 to select, for example, the play video option 1338 as shown in FIGURE 13, or the play audio option 1339. As previously described, the user can engage the system with either tactile engagement of the video interface 125 or with verbal commands via the audio input interface 122 to access the additional information.

After engaging some, all, or none of the additional information 1340, the user may select from an add to route option 1382, to modify the current route to visit the presented attraction (in this case, the first attraction 436). Otherwise, the user may elect a cancel option 1384 to remove the additional information 1340 from the visual interface 125. Again, in various embodiments, tactile or verbal commands may be used to implement these commands.

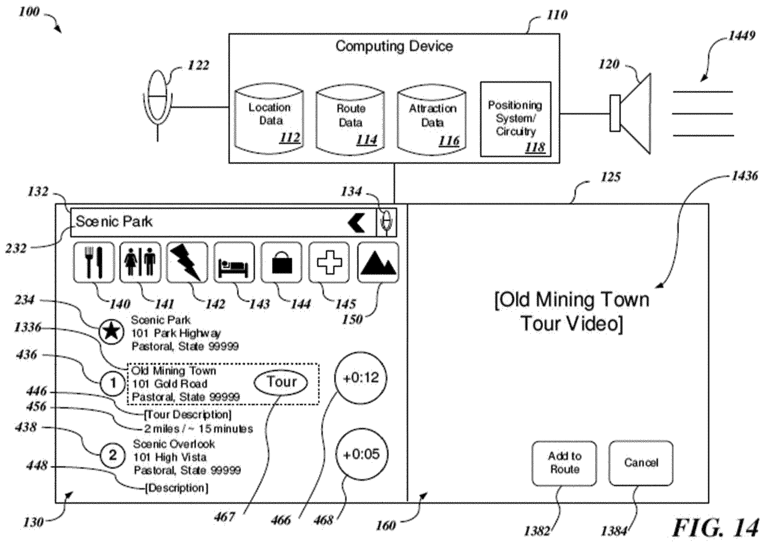

Referring additionally to FIGURE 14, with the user having selected the play video option 1338 as described with reference to FIGURE 13, the system 100 presents a video 1436 of the first attraction 436 via the visual interface 125, potentially with corresponding audio 749 provided via the audio output interface 120. After watching the video 1436 and/or skipping all or part of the video 1436, the user may select the add to route option 1382 to modify the current route to visit the first attraction 436. Otherwise, the user may elect a cancel option 1384 to revert to the previous screen from the visual interface 125. Again, in various embodiments, tactile or verbal commands may be used to implement these commands.

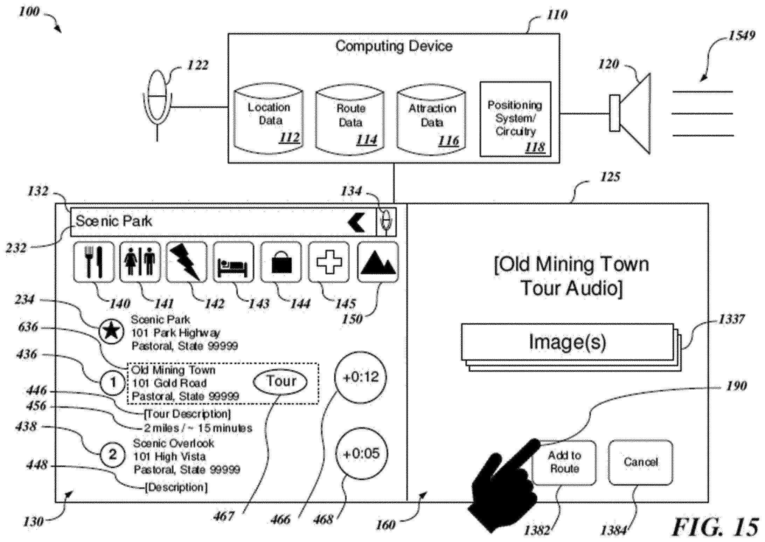

Referring additionally to FIGURE 15, if the user instead had chosen the play audio option 1339 from the selections of FIGURE 13, the user may access audio information 1549 presented via the audio output interface 120. In various embodiments, the audio information 1549 may be presented along with the images 1337 previously presented via the visual interface, with the images 1337 possibly being coordinated to advance in synchronization with the audio information 1549. After engaging with the audio 1549 (and/or the images 1337), and/or skipping all or part of the video 1549, the user may select the add to route option 1382 to modify the current route to visit the first attraction 436. Otherwise, the user may elect a cancel option 1384 to revert to the previous screen from the visual interface 125. Again, in various embodiments, tactile or verbal commands may be used to implement these commands. In the example of FIGURE 15, the user uses a digit 190 to make a tactile selection of the add to route option 1382 to add the attraction 436 to the journey.

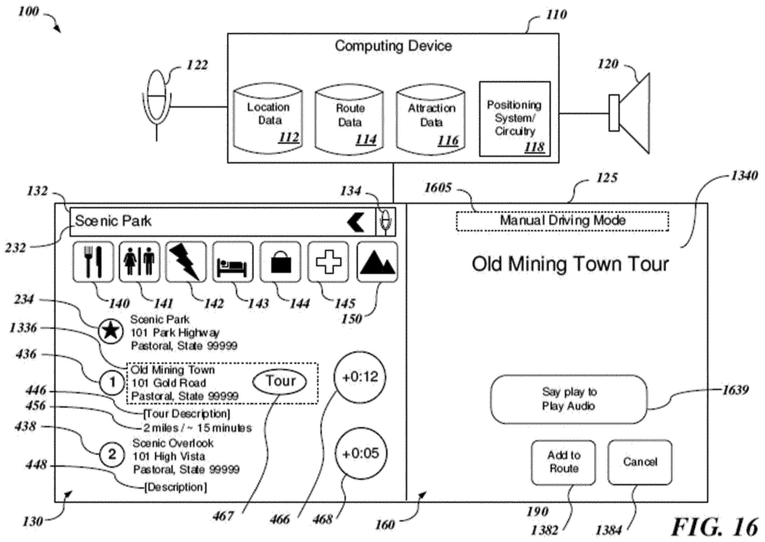

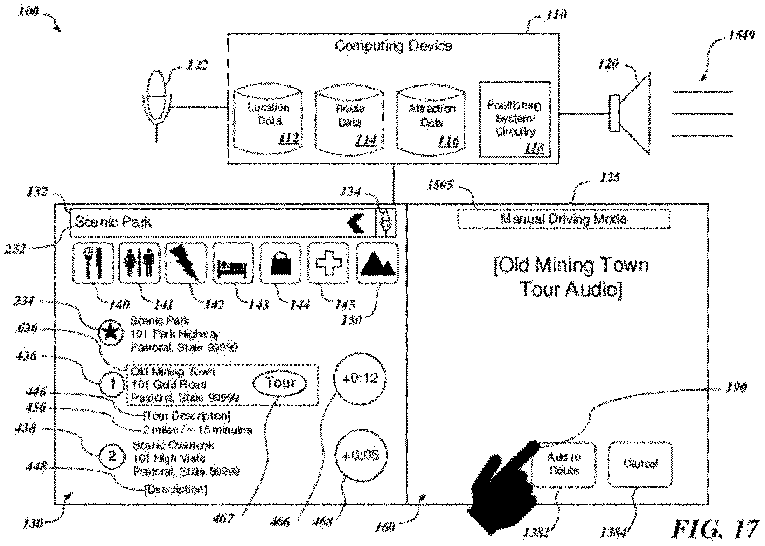

It will be appreciated that displaying images 1337 (FIGURE 15) or presenting a video 1436 (FIGURE 14) of the attraction 436 could present an undesirable distraction to an operator of a vehicle while the operator is in control of the vehicle. Accordingly, in various embodiments, media presented may be responsive to the operating mode of the vehicle. When the vehicle is parked or the vehicle is operated in a self-driving mode, or if the system 100 is disposed for use by another occupant of the vehicle, the full range of media may be presented, as previously described with reference to FIGURES 13-15. However, when the operator is driving the vehicle, the types of media presented may be restricted to avoid or limit the distraction to the operator that may result, as described below with reference to FIGURES 16 and 17.

Referring to FIGURE 16, when the vehicle is operating, the system 100 may restrict the types of media made available. As previously described with reference to FIGURE 13, upon selecting the attraction 436, the system 100 may present images 1337 or an option to present images 1367 about the attraction 436 or present a video 1438 about the attraction 436. However, when the vehicle is in a manual driving mode (which, in various embodiments may be signaled by an indicator 1605), the options to view images 1337 and video 1338 are suppressed and/or the description text 1341 also may be removed. The system 100 may continue to present a play audio option 1639 because the operator can listen to the audio without taking their eyes off the road. To further avoid operator distractions while the vehicle is in manual driving mode, in various embodiments, a verbal command received via the audio input interface is used to select the play audio option 1639 so that the operator does not take their eyes off the road or take a hand off the steering wheel to play the audio.

In addition, referring to FIGURE 17, in response to the user selection of the play audio option 1639, the audio information 1549 is presented. However, because the vehicle is in manual driving mode, in contrast to the mode of FIGURE 15, the audio information 1549 is presented without accompanying images 1337.

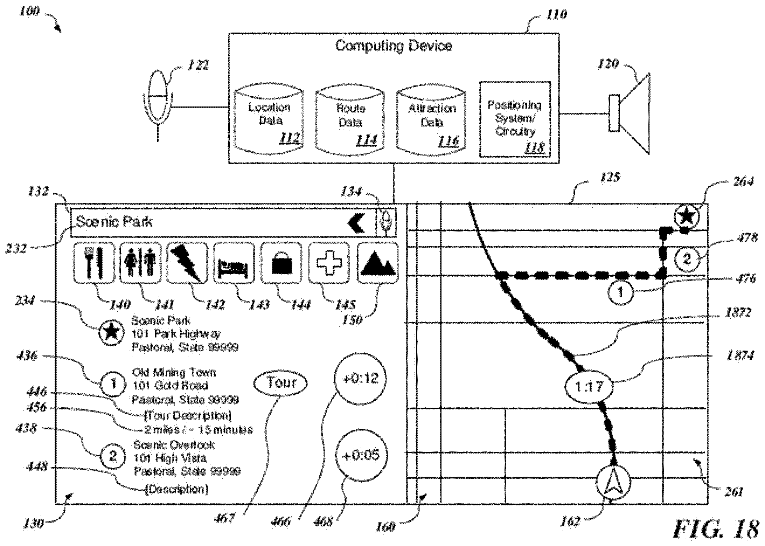

Referring additionally to FIGURE 18, in response to the user selecting to add the attraction 436 to the journey, the system 100 generates and displays an updated route 1872 to travel to the destination 264 via the position 476 of the first attraction 436. An updated estimated travel time 1874 adds the estimated time to visit to the position 476 of the first attraction 436 to the previous travel time 274 (FIGURES 2-4).

In various embodiments, the system 100 continues to recognize the original route 272 (FIGURES 2-4). Thus, upon the position of the system 100 coming within a predetermined vicinity of a turn or other navigational maneuver from the original route that is added to visit the first attraction 436, the system 100 offers the user the opportunity to cancel the visit to the first attraction 436. For example, if the user has been delayed and no longer has time to visit the first attraction 436 or has changed the user's mind about visiting the attraction, the system 100 offers the user the chance to cancel the visit to the attraction without canceling the entire journey and reentering the original destination.

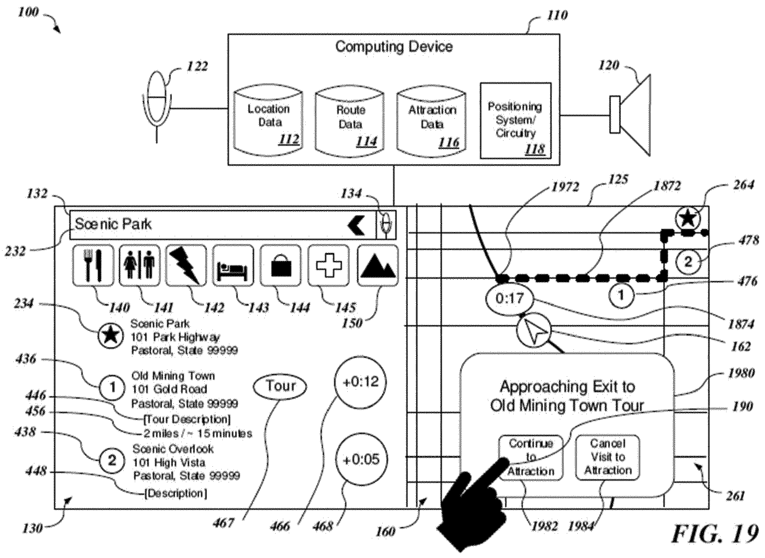

Referring additionally to FIGURE 19, the user's position 162 nears a navigational maneuver 1972, such as a turn, to continue on the updated route 1872 (that differs from the original route 272 of FIGURES 2-5). Before the position of the system 100 is within a predetermined distance of the navigational maneuver 1972, the system 100 may generate a message 1980 reminding the user of the upcoming maneuver 1972 that departs from the original route 272. In various embodiments, the user is provided a continue to attraction option 1982 and/or a cancel visit to attraction option 1984. With a tactile or verbal command (not shown in FIGURE 19), the user may choose to continue with or cancel the visit to the attraction. If the user chooses the cancel visit to attraction option 1984, the map area 160 of the visual interface 125 will revert to the original route 272 (not shown in FIGURE 19). In the example of FIGURE 19, however, the user chooses the continue to attraction option 1982 with a digit 190 via the visual interface 125. Again, verbal or other commands also may be used to perform the selected operation.

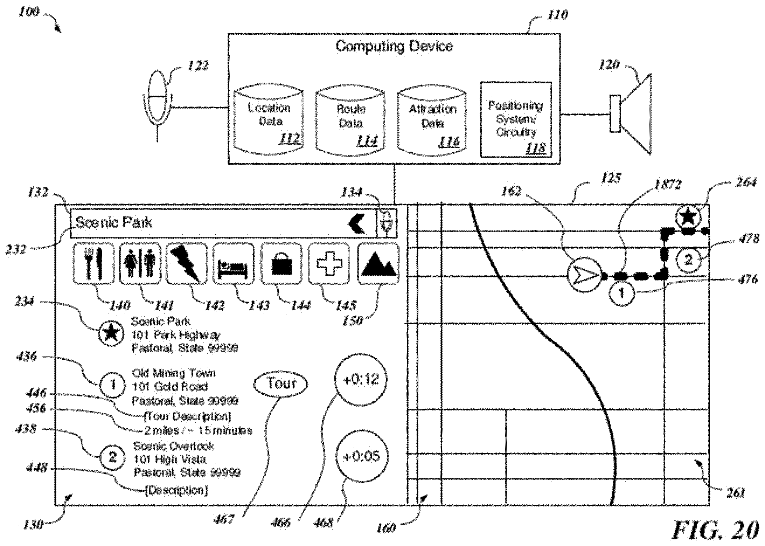

Referring additionally to FIGURE 20, following the updated route 1872 to the position 476 of the first attraction 436, the user follows the navigational maneuver 1972 (FIGURE 19) to the position 476 of the first attraction 436.

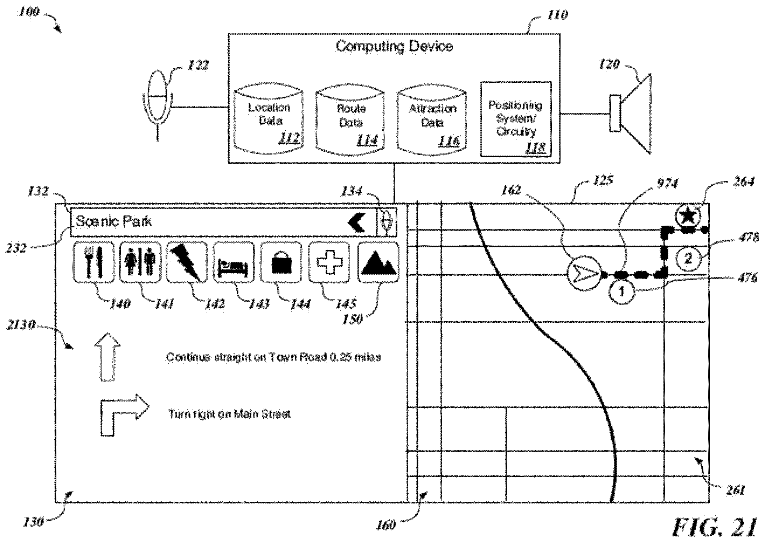

Referring additionally to FIGURE 21, although the system 100 has been previously described as providing navigational guidance via the routes 272 and 972 presented via the map section 160 of the visual interface 125, it will be appreciated that the system 100 also may present turn-by-turn directions 2130 instead of and/or in addition to the displayed route 272 or 1872. The turn-by-turn directions 2130 may be particularly desirable when the user is approaching a navigational maneuver 1972 (FIGURE 9) or the positions 476 or 478 of the attractions 436 or 438, respectively.

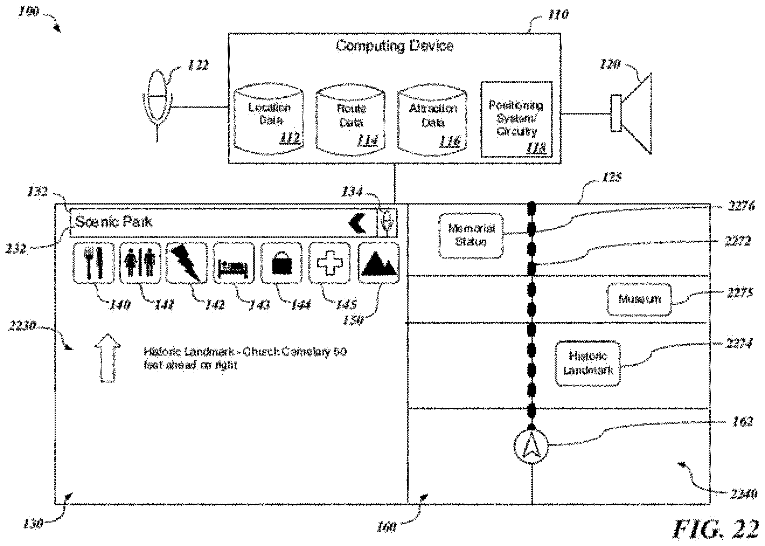

Referring additionally to FIGURE 22, in various embodiments, in response to determining the position 162 of the system 100 is within a predetermined vicinity of an attraction, such as the first attraction 436 (FIGURE 19) the system 100 presents information about the attraction 436. In various embodiments, what constitutes the predetermined vicinity may depend on the nature of size of the attraction or how close the system may come to the attraction. For example, if the attraction is a mountain, canyon, or other large geographical feature, that may be appreciated from miles away, the predetermined vicinity may constitute a range measured in miles. On the other hand, if the attraction is a famous building or an historical marker that a visitor can drive by within several feet, the predetermined vicinity may be measured in feet.

In the example of FIGURE 22, the information presented when the system is within the predetermined vicinity of the first attraction 436 may include an indication 2230 that the system 100 is approaching a point of interest included in the first attraction 436 and a close-up map 2240 of the first attraction 436. The information section 130 of the visual interface 125 may present the indication 2230 while the map section 160 presents the close-up map 2240 of the first attraction 436. In the example of FIGURE 22, the close-up map 2240 of the attraction 436 includes a tour route 2272 of the first attraction 436 extending between the points of interest 2274-2276 of the first attraction 436. Thus, in the example of FIGURE 22, the tour route 2272 extends past an historic landmark 2274, a museum 2275, and a memorial statute 2276.

In various embodiments, the information presented about an attraction or a point of interest may vary depending on time of year, time of day, or other factors. For example, some scenic views that may be appreciated in spring or summer may be obscured by fog or clouds in the fall or winter months. Similarly, locations of bird or animal migrations that may be impressive for a week or more each year but, during the remainder of the year, the locations may be unremarkable. Further, many man-made or man-controlled attractions, such as theme parks, hiking trails, or other recreational sites may be open only for some months of the year. Accordingly, the system 100 may not include these attractions or points of interest on tour routes and/or the system 100 may not present information about these attractions or points of interest during times of year when they are unavailable or inaccessible.

In addition, many attractions or points of interest, including amusement parks, museums, trails, etc., may only be open during particular hours or only during daylight hours. Accordingly, the system 100 may only present information about these attractions or points of interest during hours when they are open to the public.

In various embodiments, a user option may determine whether information is presented about attractions or points of interest all the time or only at times of day or of the year when the attractions are accessible. For example, even if a person cannot visit an historical museum at a time when they happen to drive by, they nonetheless may be interested in hearing information about the museum's collection. Thus, a user may be able to decide whether information about attractions or points of interest is presented even when the attractions or points of interest are not presently accessible.

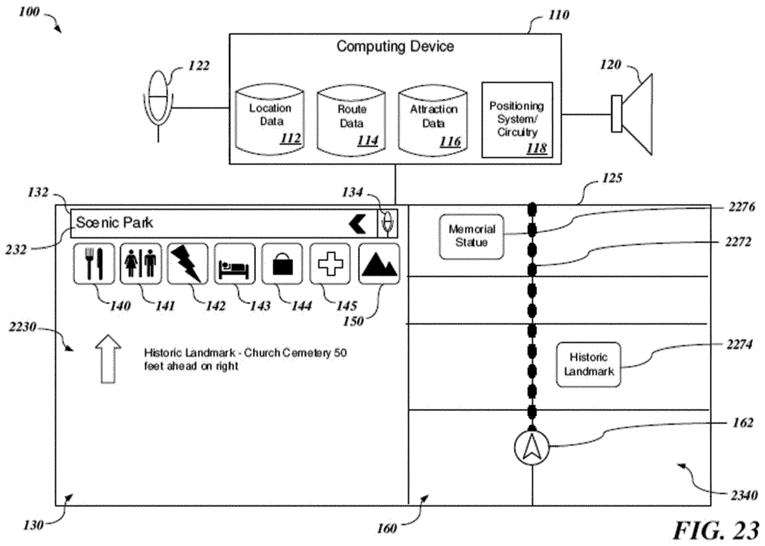

In the example of FIGURE 22, it is assumed that the system 100 has arrived within the predetermined vicinity of the points of interest 2274-2276 when all of the points of interest 2274-2276 are accessible. However, referring additionally to FIGURE 23, it is assumed that the system 100 has arrived within the predetermined vicinity of the attraction 436 on a day or during a time when the point of interest 2275 (FIGURE 22) is closed. Accordingly, in various embodiments, the system 100 will not include the point of interest 2275 on the tour route 2272 and the point of interest 2275 is thus not shown on the close-up map 2340 of the attraction 436. Correspondingly, the system 100 will not present information about the point of interest 2275 as the system 100 proceeds along the tour route 2272 as it does for the other points of interest 2274 and 2276.

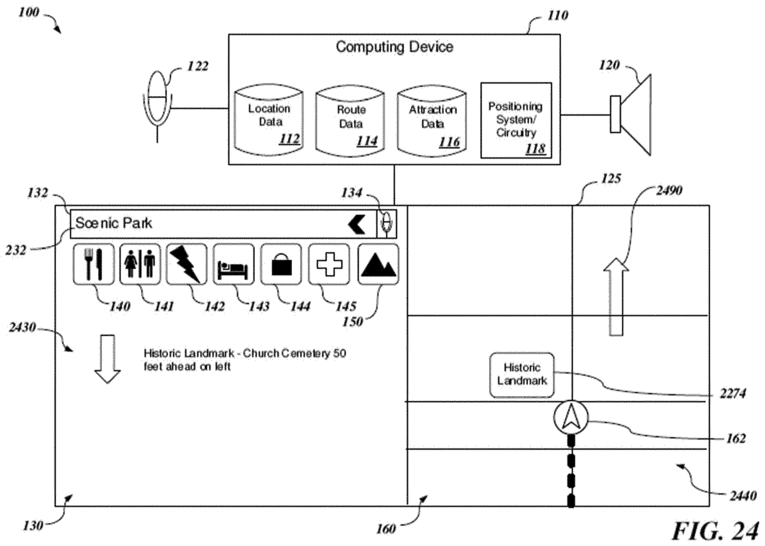

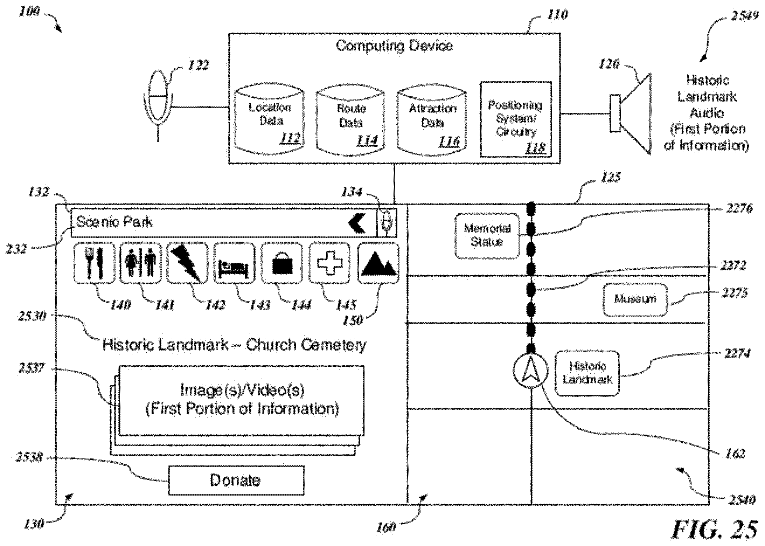

In addition to being responsive to whether the vehicle is being driven manually or autonomously in determining whether to present information about some points of interest, the system 100 also may be responsive to a speed, heading, or other aspect of how the vehicle is being operated. Referring additionally to FIGURE 24, for example, it is assumed that the vehicle is being manually driven along a route 2472 in an opposite direction from the route 2272 (FIGURES 22 and 23), as reflected by the map 2440 being reversed from that of the map 2340 (FIGURE 23). Also, the vehicle is being driven at a higher speed than in the example of FIGURE 23, as represented by the arrow 2490. In the example of FIGURE 24, only one point of interest 2274 is presented. In various embodiments, the system 100 may recognize the rate of speed that the vehicle is traveling and determine, for example, that the point of interest 2276 (FIGURE 23) is too small to be viewed at that rate of speed. In addition or alternatively, the system 100 may recognize that the point of interest 2276 may not be viewable and/or reasonably viewable from a vehicle headed in the opposite direction from that as described with reference to FIGURE 23. Thus, based on a speed, heading, or other attribute of the vehicle's travel, the system 100 may not present information about some points of interest 2276. Upon the position of the system coming within a predetermined vicinity of the point of interest 2274, the system 100 may present information about the point of interest, as described below with regard to FIGURES 25-27.

Referring additionally to FIGURE 25, in various embodiments, when the system 100 is within the predetermined vicinity of the first point of interest 2274 as shown on the close-up map 2574, the system 100 presents information about the first point of interest 2274 of the attraction 436, an "Historic Landmark". The information about the first point of interest 436 may include descriptive text 2530, images and/or videos 2537, and/or audio information 2549 about the first point of interest 2274. In various embodiments, the text 2530, images/videos 2537, and/or audio 2549 are associated with the first point of interest 2274 and maybe automatically presented when the system 100 determines that it is within a predetermined vicinity of the first point of interest 2274). Otherwise, instead of automatically presenting the text 2530, images and/or videos 2537, and/or audio information 2549 when the system is within the predetermined vicinity of the first point of interest 2274, the system 110 may present the user with one or more prompts to optionally present the text 2530, images and/or videos 2537, and/or audio information 2549 when the system 100 is within the predetermined vicinity of the first point of interest 2274.

In various embodiments, when the system 100 is within the predetermined vicinity of an attraction or a point of interest, the system 100 may offer the user an opportunity to make a donation to an organization that maintains the attraction or point of interest or who is affiliated with an organization that preserves wildlife or historical sites that maybe associated with the attraction or point of interest. The system 110 may present a donate option 2538. The system 100 may prompt a user for a payment amount and account information or, in various embodiments the system 100 may maintain payment information that can be applied to conveniently make a donation. In various embodiments, the donate option 2538 may be presented after media, such as the images and/or videos 2537, and/or audio information 2549 about the first point of interest 2274, has been presented. As a result, the donate option 2538 is presented when the potential donor has information to consider in whether to make a donation.

As previously described with reference to FIGURES 16 and 17, in various embodiments, the system 100 is responsive to whether the vehicle with which the system 100 is associated is being driven manually or is in auto-driving mode. As previously described, the system 100 may restrict the presentation of images or video information about attractions of possible interest when the operator manually operates the vehicle to avoid distracting the operator. In the example of FIGURE 25, it is assumed that the operator is not manually driving the vehicle, thus, text 2530, and/or images/videos 2537 associated with the first point of interest 2274 may be presented via the visual interface 125.

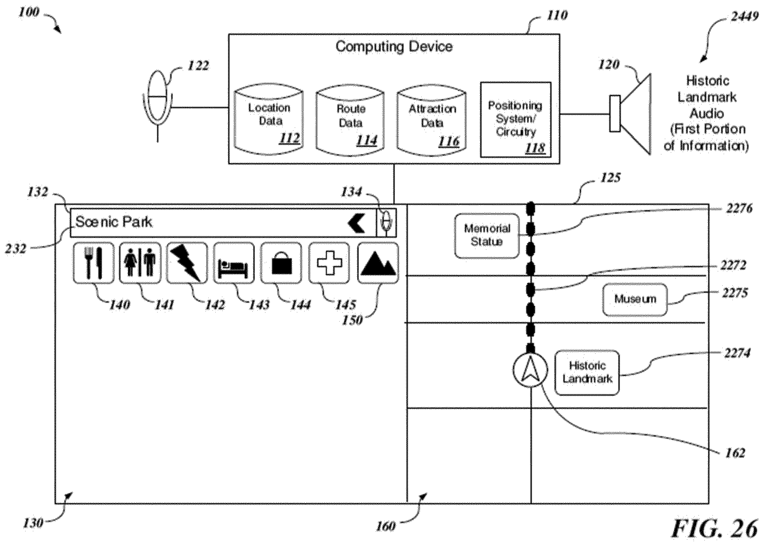

By contrast, referring additionally to FIGURE 26, it is assumed that the vehicle with which the system 100 is associated is being manually driven by the operator. Thus, text 2530 and images/videos 2537 associated with the first point of interest 2274 are not presented via the visual interface 125 to avoid distracting the operator. However, the audio information 2549 about the first point of interest 2274 still may presented because the audio information 2549 may not cause the operator to take their eyes from the road.

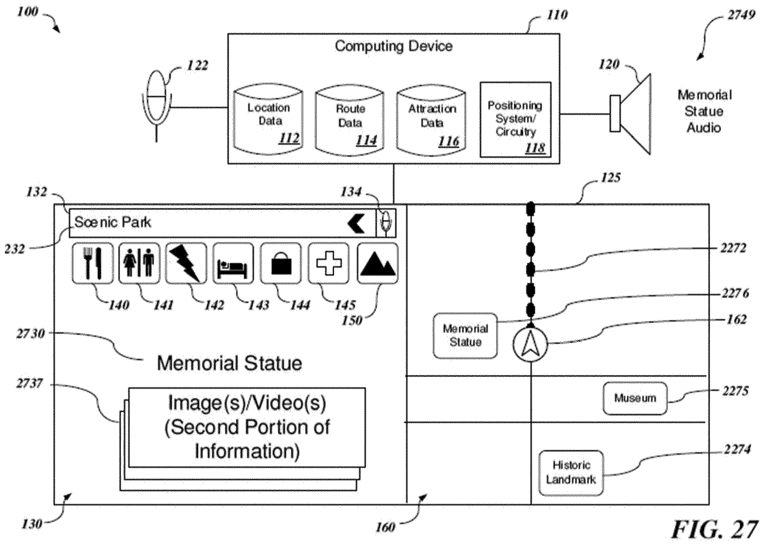

Referring additionally to FIGURE 27, as the system 100 comes within the predetermined vicinity of the third point of interest 2276 on the tour route 2272, the system 100 presents information about the third point of interest 2276 of the attraction 436, the "Memorial Statue." (Although not described here, if the system 100 includes information about the second point of interest 2275, the museum, the system 100 would present the information in the same manner as described with reference to the first point of interest 2274 and the third point of interest 2276.) The information presented may include text 2730, images and/or videos 2737, and/or audio information 2749 about the third point of interest 2276 that is different from the information presented about the first point of interest 2274. Thus, in various embodiments, the system 100 is responsive to its position relative to specific points of interest associated with an attraction and presents information when the system 100 is within a predetermined vicinity of each respective point of interest. It will be appreciated that, if the attraction 436 included only a single point of interest, then all information about the attraction may be presented when the system 100 comes within the predetermined vicinity of the single point of interest of the attraction 436.

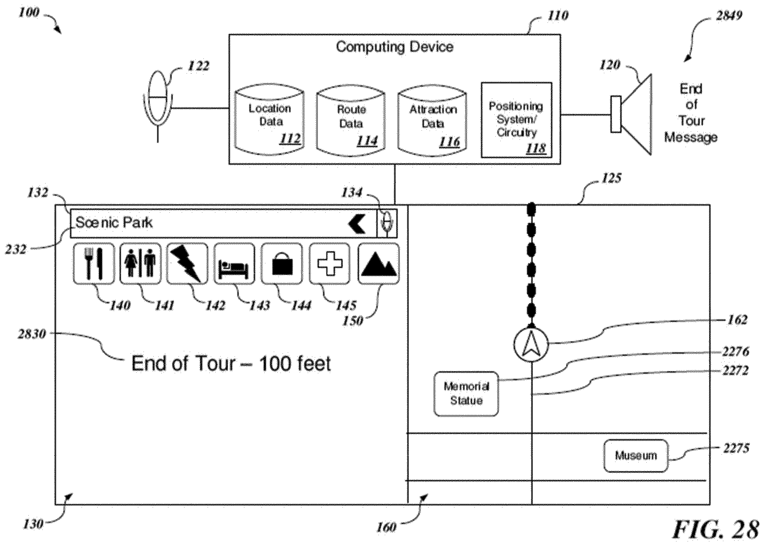

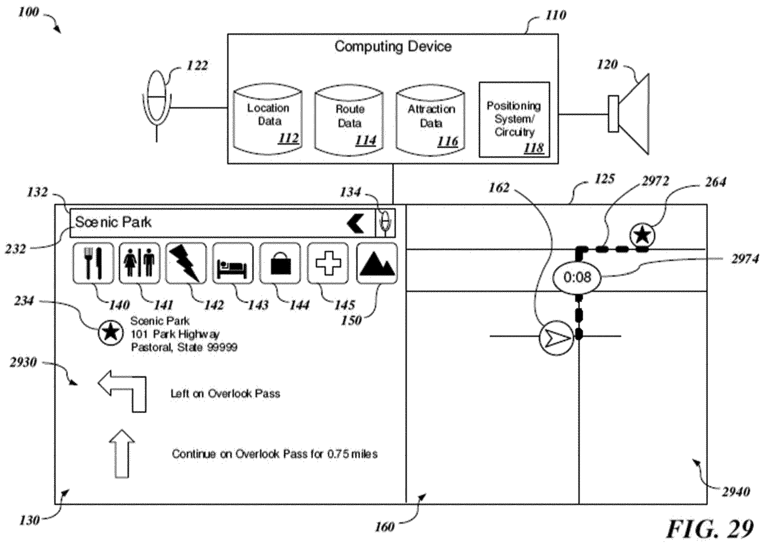

Referring additionally to FIGURE 28, upon passing the last point of interest 2276 of the attraction 436, in various embodiments the system 100 signals presents a textual end of tour message 2830 and/or an audio end of tour signal 2849, signaling the end of the visit to the attraction 436. Referring to FIGURE 29, in various embodiments, the system 100 then reverts to providing navigational information by showing turn-by-turn directions 2930 in the information section 130 of the visual interface 125 and showing an updated map 2940 in the map section 160 of the visual interface 125. In various embodiments, the updated map 2961 shows the route 2972 to the destination 264 and an updated estimated time 2974 to reach the destination 264. The user can follow the navigational guidance provided by the system 100 via the visual interface 125 to complete the journey.

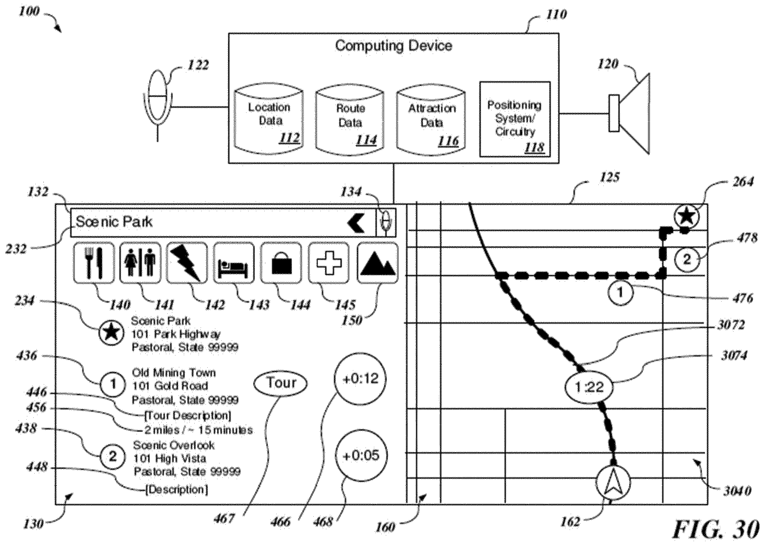

It will be appreciated that multiple attractions may be added to a route. Referring additionally to FIGURE 30, in response to the user choosing to add the first attraction 436 and the second attraction 438 in a manner as previously described, the system 100 will generate an updated map 3040 in which the route 3072 will take the user to the position 476 of the first attraction 436 and the second position 478 of the second attraction 438. An updated estimate of time 3074 includes the travel time to the location 264 of the destination 234 via both destinations. It will be appreciated that, when the system 100 is within the predetermined vicinity of each of one or more points of interest of each of the attractions 438 and 438, the system 100 may present information about the points of interest as previously described with reference to FIGURES 25-27.

In various embodiments, the system 100 of FIGURES 1-30 may be integrated into or carried aboard any suitable vehicle as desired. A vehicle may include a car, truck, sport utility vehicle, van, recreational vehicle, marine vessel (such as a boat or a ship), aircraft (such as fixed-wing aircraft, rotary wing aircraft, and lighter-than-air craft), train, motorcycle, or a human-powered vehicle such as a bicycle, tricycle, unicycle, scooter, skateboard, or the like.

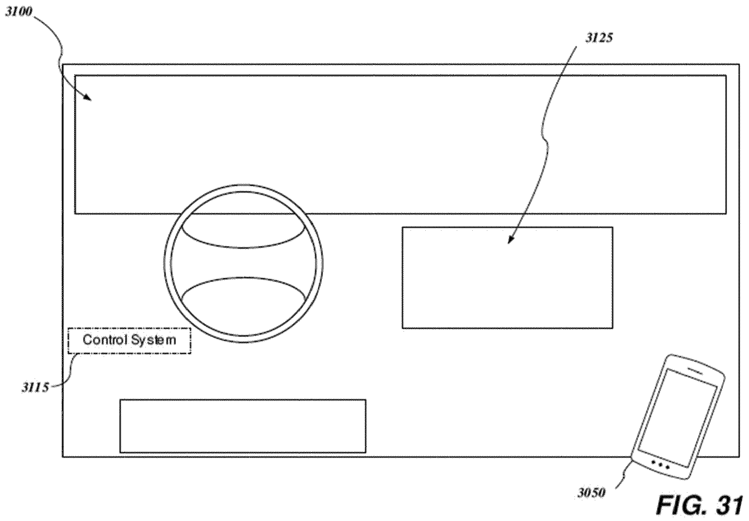

Referring additionally to FIGURE 31, in various embodiments a cabin 3100 (if provided) of a vehicle includes an integrated navigation system 3125 that incorporates the system 100. The system 100 may be integrated with a control system 3115 (shown in dotted lines in FIGURE 31 to indicate that the control system 3115 may not be visible within the cabin 3100) of the vehicle that controls operation of the vehicle. The control system 3115 may include a self-driving system to enable the vehicle to drive autonomously without operator control, as previously described. The control system 3115 may also provide operator assistance features, such as automatic braking, lane-keeping assistance, and similar features. The system 100 also may be a standalone system integrated within the vehicle. Otherwise, the system 100 may include a standalone computing device 3050 that is transportable with or without a vehicle, such as a smartphone or tablet computer.

Referring additionally to FIGURE 32 and given by way of example only and not of limitation, an illustrative computing device 3200 may be used aboard a vehicle to perform the functions of the navigation system with tour guide mode as previously described with reference to FIGURES 1-30. In various embodiments, the computing device 3200 typically includes at least one processing unit 3220 and a system memory 3230. Depending on the configuration and type of computing device, the system memory 3230 may include volatile memory, such as random-access memory ("RAM"), non-volatile memory, such as read-only memory ("ROM"), flash memory, and the like, or a combination of volatile memory and non-volatile memory. The system memory 3230 typically maintains an operating system 3232, one or more applications 3232, and program data 3234. The operating system 3232 may include any number of operating systems executable on desktop or portable devices including, but not limited to, Linux, Microsoft Windows^{®}, Apple iOS^{®}, or Android^{®}, or a proprietary operating system. The applications 3232 may include an embodiment of the navigation with tour guide mode 3233 as herein described. The program data 3234 may include the position data 3235, route data 3236, and attraction data 3237, as previously described.

The computing device 3200 may also have additional features or functionality. For example, the computing device 3200 may also include additional data storage devices (removable and/or non-removable) such as, for example, magnetic disks, optical disks, tape, or flash memory. Such additional storage devices are illustrated in FIGURE 32 by removable storage 3240 and non-removable storage 3250. Computer storage media may include volatile and non-volatile, removable and non-removable media implemented in any method or technology for storage of information, such as computer-readable instructions, data structures, program modules or other data. The system memory 3230, the removable storage 3240, and the non-removable storage 3250 are all examples of computer storage media. Available types of computer storage media include, but are not limited to, RAM, ROM, EEPROM, flash memory (in both removable and non-removable forms) or other memory technology, CD-ROM, digital versatile disks (DVD) or other optical storage, magnetic cassettes, magnetic disk storage or other magnetic storage devices, or any other medium which can be used to store the desired information and which can be accessed by the computing device 3200. Any such computer storage media may be part of the computing device 3200.

The computing device 3200 may also have input device(s) 3260 such as a keyboard, stylus, voice input device, touchscreen input device, etc. Output device(s) 3270 such as a display, speakers, short-range transceivers such as a Bluetooth transceiver, etc., may also be included. The computing device 3200 also may include one or more communication systems 3280 that allow the computing device 3200 to communicate with other computing systems 3290, as further described below. As previously mentioned, the communication system 3280 may include systems for wired or wireless communications. Available forms of communication media typically carry computer-readable instructions, data structures, program modules or other data in a modulated data signal such as a carrier wave or other transport mechanism and includes any information delivery media. The term "modulated data signal" may include a signal that has one or more of its characteristics set or changed in such a manner as to encode information in the signal. By way of illustrative example only and not of limitation, communication media may include wired media such as a wired network or direct-wired connection, and wireless media such as acoustic, radio frequency (RF), infrared and other wireless media. The term computer-readable media as used herein includes both storage media and communication media.

In further reference to FIGURE 32, the computing device 3200 may include global positioning system ("GPS")/geolocation circuitry 3285 that can automatically discern its position based on relative distances to multiple GPS satellites or other signal sources, such as cellphone towers. As described further below, GPS/geolocation circuitry 3285 may be used to determine a position of the system. In various embodiments, the GPS/geolocation circuitry 3285 may be used to determine a position for generation and analysis of navigation information.

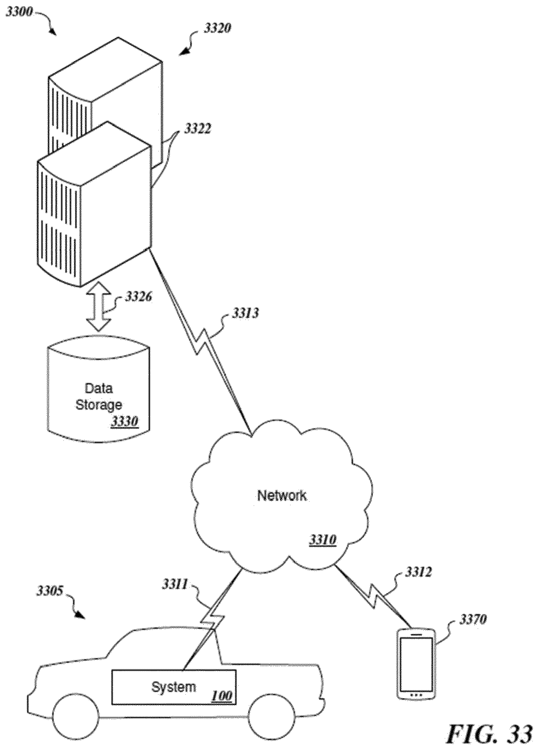

In addition to one or more onboard computing systems, various embodiments may communicate with remote computing systems to perform the functions herein described. Referring to FIGURE 33, an operating environment 3300 may include one or more sets or remote computing systems 3320, each of which may include multiple computing devices 3322. The remote computing system 3320 may provide an additional source of location data, route data, and attraction data, as well as a directory of destinations by name, address, and/or position that the user may wish to travel to as a destination or intermediate destination. The remote computing system 3120 also may provide updated or additional information about attractions, such as text, images, videos, and/or audios about various attractions, as previously described.

The remote computing system 3320 each may include a server or server farm and may communicate with the network 3310 over wired and/or wireless communications links 3313. The remote computing system 3320 may access programming and data used to perform their functions over high-speed buses 3326 to interact with data storage 3330.

In various embodiments the system 100 may be disposed aboard a vehicle 3305. The system 100 may communicate over the network 3310 via a communications link 3311 to access the remote computing system 3320 to access the data stored there. The communications link 3311 may include a wireless communications link to enable mobile communications with the system 100 aboard the vehicle 3305 or may include a wired link when the vehicle 3305 is stopped.

The system 100 also may be supported by a computing system 3370 that is not integrated with or transported aboard the vehicle 3305, as described with reference to FIGURE 31. The computing system 3370 may include a portable computing system, such as a portable computer, tablet computer, smartphone, or smartwatch and may be used to generate navigation data with tour guide mode. The computing system 3370 may communicate over the network 3310 via a communications link 3312 to access the remote computing system 3320 to access the position data, route data, and attraction data. The communications link 3312 may include a wireless or a wired communications link.

Referring to FIGURE 33, in various embodiments the navigation system 100 (with tour guide mode) of FIGURES 1-30 may be integrated with the vehicle 3405 and/or operate in connection with a vehicle control system 3115. In various embodiments, the vehicle 3305 includes a body 3402 that may support the cabin 3100 (FIGURE 30) capable of accommodating an operator, one or more passengers, and/or cargo. In various embodiments, the vehicle 3305 maybe controlled by an operator, the vehicle 3305 may include a self-driving system enabling the vehicle 3305 to operate as a self-driving vehicle 3305, and/or the vehicle 3305 may be manually drivable but may provide operator assistance features, such as lane-keeping assistance, automatic breaking, and similar features. When the vehicle 3305 is a self-driving vehicle or is capable of self-driving, the vehicle 3305 may use the route information generated by the system to drive to the destination 264, to an attraction 476 or 478, or to other places identified by the system 100. The vehicle 3405 also may be an autonomous vehicle that travels without an operator to transport passengers and/or cargo.

The body 3402 also may include a cargo area 3406 separate from the cabin 3100, such as a trunk or a truck bed, capable of transporting cargo. The vehicle 3405 includes a drive system 3410, as further described below, which is selectively engageable with one or more front wheels 3412 and/or one or more rear wheels 3414 to motivate, accelerate, decelerate, stop, and steer the vehicle 3405. The drive system 3410 may include an electrically-powered system, a fossil-fuel-powered system, a hybrid system using both electric power and fossil fuels, or another type of power source. In various embodiments, the system 100 may be an integral part of the vehicle 3405, operably coupled with the control system 3115 that controls operation of the vehicle 3405.

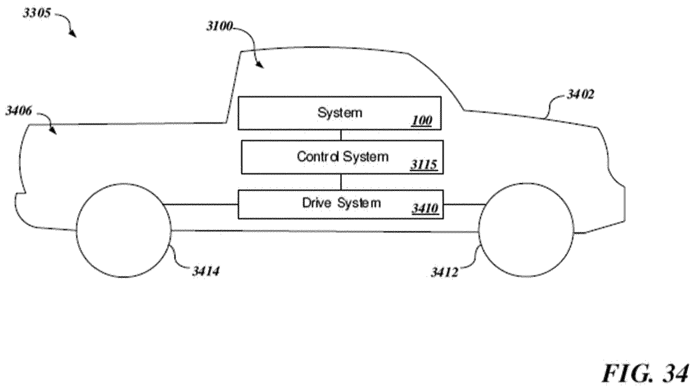

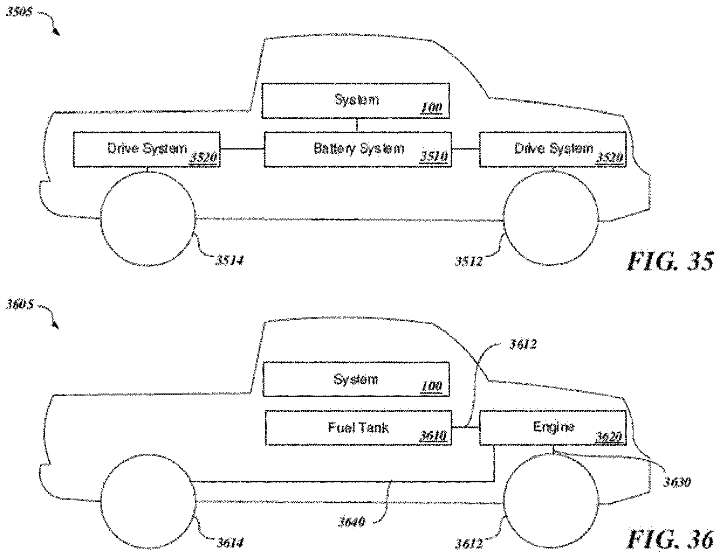

Referring additionally to FIGURE 35, the system 100 may be used with an electrically-powered vehicle 3505. The wheels 3512 and/or 3514 may be motivated by one or more electrically-powered drive systems 3520 and/or 3530, such as motors, operably coupled with the wheels 3512 and/or 3514. The drive systems 3520 and 3530 draw power from a battery system 3510, which also may be used to power the system 100. Referring additionally to FIGURE 36, the system 100 may be used with an internal combustion engine-powered vehicle 3605. The wheels 3612 and/or 3614 may be motivated by an internal combustion or hybrid engine 3620 coupled with a fuel tank 3610 via a fuel line 3612. The engine 3620 may be coupled to the wheels 3612 and/or 3614 by mechanical linkages 3630 and 3640, respectively, including axles, transaxles, or other drive train systems to provide rotational force to power the wheels 3612 and/or 3614. It will be appreciated that FIGURES 34-36 show wheeled land vehicles, as previously mentioned, the system 100 may be integrated with other land vehicles, aircraft, marine craft, either motor-driven or human-powered.

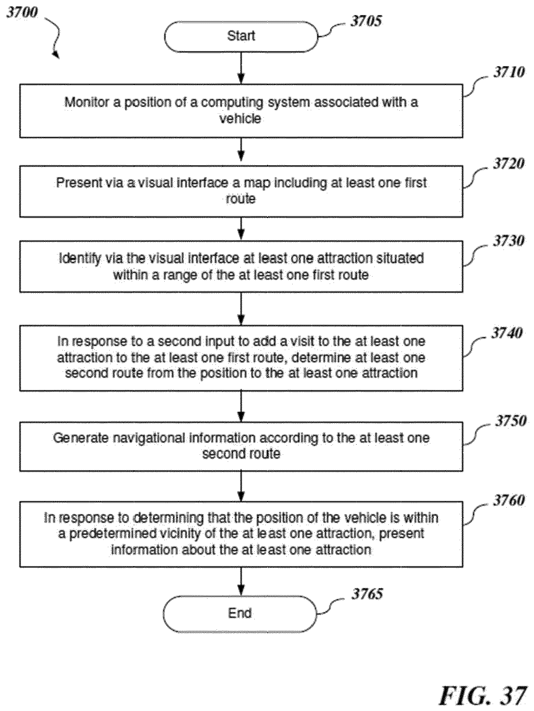

Referring to FIGURE 37, an illustrative method 3700 is provided for a system to present an option to visit an attraction along a route, navigational information to reach the attraction, and information about the attraction. The method 3700 starts at a block 3705. At a block 3710, a position of the vehicle is monitored. At a block 3720, a map including the at least one first route is presented via a visual interface. At a block 3730, via the visual interface, at least one attraction situated within a range of the at least one first route is identified. At a block 3740, in response to a second input to add a visit to the at least one attraction to the route, at least one second route from the position to the at least one attraction is determined. At a block 3750, navigational information according to the at least one second route is generated. At a block 3760, in response to determining that the vehicle is within a predetermined vicinity of the at least one attraction, information about the at least one attraction is presented. The method 3700 ends at a block 3765.

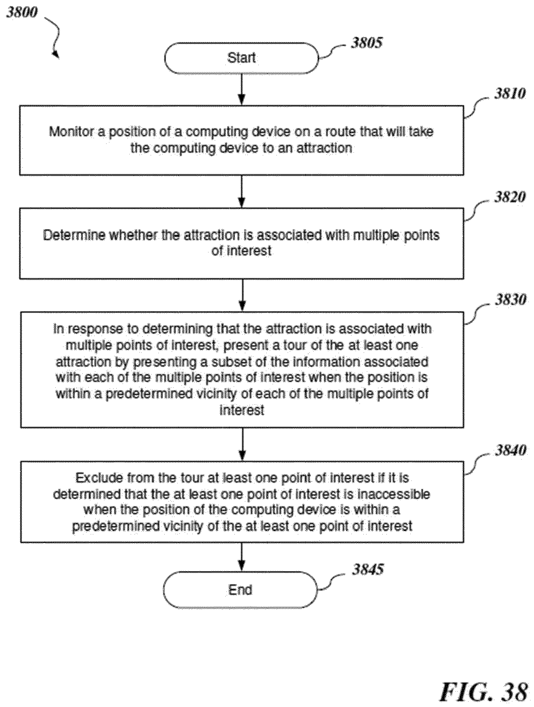

Referring to FIGURE 38, an illustrative method 3700 is provided for a system to present an option to visit an attraction along a route, navigational information to reach the attraction and to present information about the attraction according to a driving mode. The method 3600 starts at a block 3605. At a block 3610, a position of a computing device is monitored. At a block 3620, a first input indicative of a destination is received. At a block 3630, at least one first route from a starting point to the destination is determined. At a block 3640, a map including the at least one first route is presented via a visual interface. At a block 3650, via the visual interface, at least one attraction situated within a range of the at least one first route is identified. At a block 3660, in response to a second input to add a visit to the at least one attraction to the route, at least one second route from the starting point to the destination via the at least one attraction is determined. At a block 3670, navigational information according to the at least one second route is generated. At a block 3680, in response to determining that the position of the computing system is within a predetermined vicinity of the at least one attraction, information about the at least one attraction is presented. The method 3600 ends at a block 3685.

Those skilled in the art will recognize that at least a portion of the devices and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term module, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of module (e.g., at a first time), as a second type of module (e.g., at a second time, which may in some instances coincide with, overlap, or follow a first time), and/or as a third type of module (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first module that has a first purpose, then a second module that has a second purpose and then, a third module that has a third purpose, and so on. The transition of a reconfigurable and/or controllable component may occur in as little as a few nanoseconds, or may occur over a period of minutes, hours, or days.

In some such examples, at the time the component is configured to carry out the second purpose, the component may no longer be capable of carrying out that first purpose until it is reconfigured. A component may switch between configurations as different modules in as little as a few nanoseconds. A component may reconfigure on-the-fly, e.g., the reconfiguration of a component from a first module into a second module may occur just as the second module is needed. A component may reconfigure in stages, e.g., portions of a first module that are no longer needed may reconfigure into the second module even before the first module has finished its operation. Such reconfigurations may occur automatically, or may occur through prompting by an external source, whether that source is another component, an instruction, a signal, a condition, an external stimulus, or similar.

For example, a central processing unit of a personal computer may, at various times, operate as a module for displaying graphics on a screen, a module for writing data to a storage medium, a module for receiving user input, and a module for multiplying two large prime numbers, by configuring its logical gates in accordance with its instructions. Such reconfiguration may be invisible to the naked eye, and in some embodiments may include activation, deactivation, and/or re-routing of various portions of the component, e.g., switches, logic gates, inputs, and/or outputs. Thus, in the examples found in the foregoing/following disclosure, if an example includes or recites multiple modules, the example includes the possibility that the same hardware may implement more than one of the recited modules, either contemporaneously or at discrete times or timings. The implementation of multiple modules, whether using more components, fewer components, or the same number of components as the number of modules, is merely an implementation choice and does not generally affect the operation of the modules themselves. Accordingly, it should be understood that any recitation of multiple discrete modules in this disclosure includes implementations of those modules as any number of underlying components, including, but not limited to, a single component that reconfigures itself over time to carry out the functions of multiple modules, and/or multiple components that similarly reconfigure, and/or special purpose reconfigurable components.

In some instances, one or more components may be referred to herein as "configured to," "configured by," "configurable to," "operable/operative to," "adapted/adaptable," "able to," "conformable/conformed to," etc. Those skilled in the art will recognize that such terms (for example "configured to") generally encompass active-state components and/or inactive-state components and/or standby-state components, unless context requires otherwise.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. It will be understood by those within the art that, in general, terms used herein, and especially in the appended claims (for example, bodies of the appended claims) are generally intended as "open" terms (for example, the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (for example, "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (for example, the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (for example, "a system having at least one of A, B, and C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or any combination thereof. In an embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as any combination thereof, and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While the disclosed subject matter has been described in terms of illustrative embodiments, it will be understood by those skilled in the art that various modifications can be made thereto without departing from the scope of the claimed subject matter as set forth in the claims.

It will be appreciated that the detailed description set forth above is merely illustrative in nature and variations that do not depart from the gist of the claimed subject matter are intended to be within the scope of the claims. Such variations are not to be regarded as a departure from the scope of the claimed subject matter.

## Claims

1. A system comprising:
a computing system having computer-readable media storing computer-executable instructions configured to cause the computing system to:
monitor a position of the computing system;
present via a visual interface a map including at least one first route;
identify via the visual interface at least one attraction situated within a range of the at least one first route;
in response to a request to add a visit to the at least one attraction, determine at least one second route from the position to the at least one attraction;
present the at least one second route on the map;
generate navigational information according to the at least one second route; and
in response to determining that the position is within a predetermined vicinity of the at least one attraction, present information about the at least one attraction.

2. The system of Claim 1, wherein the first route is chosen from:
a route to a specified destination; and
a currently-travelled route.

3. The system of Claim 2, wherein multiple attractions are situated within the range of the first route and the computer-executable instructions are further configured to cause the computing system to at least one of select, filter, and sort the multiple attractions according to a user preference input.

4. The system of Claim 2, wherein the computer-executable instructions are further configured to cause the computing system to:
receive an information request from a user for the at least one attraction; and
in response to receiving the information request, provide at least a portion of the information regarding the at least one attraction via an output chosen from one of the visual interface and an audio interface.

5. The system of Claim 4, wherein the information is chosen from a description of the at least one attraction, a projected additional travel time to the destination traveling via the at least one attraction, a projected visit time to experience the at least one attraction, and an availability of a power replenishment station for the vehicle in proximity to the at least one attraction.

6. The system of Claim 1, wherein the computer-executable instructions are further configured to cause the computing system to:
determine when the attraction is associated with multiple points of interest; and
in response to determining that the attraction is associated with multiple points of interest, presenting a tour of the at least one attraction by presenting a subset of the information associated with each of the multiple points of interest when the position is within a predetermined vicinity of each of the multiple points of interest.

7. The system of Claim 6, wherein the computer-executable instructions are further configured to cause the computing system to:
determine whether at least one point of interest of the multiple points of interest is inaccessible when the position is within a predetermined vicinity of at least one point of interest; and
in response to determining the at least one point of interest is not accessible, excluding the at least one point of interest from the tour.

8. The system of Claim 6, wherein the computer-executable instructions are further configured to cause the computing system to determine that the point of interest is inaccessible when the position is within a predetermined vicinity of at least one point of interest based on at least one condition chosen from the point of interest being closed to visitors, the point of interest being inactive as a tourist destination, and the point of interest not being viewable based on one of a heading of the vehicle, a speed of the vehicle, and the vehicle being manually driven by an operator.

9. The system of Claim 1, wherein the computing system is in communication with a vehicle that includes a self-driving system and the navigational information is used by the self-driving system to control a drive system of the vehicle on at least one of the at least one first route and the at least one second route.

10. A vehicle comprising:
a cabin configured to receive at least one occupant;
a drive system configured to motivate, accelerate, decelerate, stop, and steer the vehicle; and
a system according to any one of claims 1 to 8.

11. The vehicle of Claim 10, wherein the vehicle includes a self-driving system in communication with the computing system and the navigational information is used by the self-driving system to control a drive system of the vehicle on at least one of the at least one first route and the at least one second route.

12. A computer-implemented method comprising:
monitoring a position of a computing device associated with a vehicle;
presenting via a visual interface a map at least one first route;
identifying via the visual interface at least one attraction situated within a range of the at least one first route;
in response to a second input to add a visit to the at least one attraction to the route, determining at least one second route from the position to the at least one attraction;
presenting the at least one second route on the map;
generating navigational information according to the at least one second route; and
in response to determining the position is within a predetermined vicinity of the at least one attraction, presenting information about the at least one attraction.

13. The computer-implemented method of Claim 12, further comprising:
determining when the attraction is associated with multiple points of interest; and
in response to determining that the attraction is associated with multiple points of interest, presenting a tour of the at least one attraction by presenting a subset of the information associated with each of the multiple points of interest when the position is within a predetermined vicinity of each of the multiple points of interest.
